Europäisches Patentamt

European Patent Office

Office européen des brevets

(19)

(11) **EP 0 863 705 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **96938177.1**

(22) Anmeldetag: **12.11.1996**

(51) Int Cl.$^7$: **A01N 43/90**
 // (A01N43/90, 57:22, 47:30, 47:12, 43:88, 43:82, 43:78, 43:76, 43:70, 43:56, 43:42, 43:20, 43:12, 43:10, 37:48, 37:38, 37:18, 35:06, 33:18)

(86) Internationale Anmeldenummer:
**PCT/EP96/04935**

(87) Internationale Veröffentlichungsnummer:
**WO 97/17852 (22.05.1997 Gazette 1997/22)**

(54) **SYNERGISTISCHE HERBIZIDE MISCHUNGEN**

SYNERGETIC HERBICIDAL MIXTURES

MELANGES HERBICIDES SYNERGIQUES

(84) Benannte Vertragsstaaten:
**DE ES FR GR IT**

(30) Priorität: **15.11.1995 DE 19544393**

(43) Veröffentlichungstag der Anmeldung:
**16.09.1998 Patentblatt 1998/38**

(73) Patentinhaber: **Aventis CropScience GmbH**
**65929 Frankfurt am Main (DE)**

(72) Erfinder:
• **REES, Richard**
  **Pensacola, FL 32514 (US)**
• **BOHNER, Jürgen**
  **D-12163 Berlin (DE)**
• **RICHTER, Eberhard**
  **D-12107 Berlin (DE)**

(56) Entgegenhaltungen:
**EP-A- 0 542 388          WO-A-94/08999**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft neue Mischungen von 1-(3-Chlor-4,5,6,7-tetrahydropyrazolo-[1,5-a]-pyridin-2-yl)-5-(methyl-propargylamino)-4-pyrazolylcarbonsäurenitril und anderen Herbiziden sowie ihre Anwendung zur Bekämpfung von Unkräutern in landwirtschaftlichen Pflanzenkulturen.

Die herbizide Wirkung von 1-(3-Chlor-4,5,6,7-tetrahydropyrazolo-[1,5-a]-pyridin-2-yl)-5-(methyl-propargylamino)-4-pyrazolylcarbonsäurenitril ist bereits bekannt (DE OS 43 15 330). Es ist weiterhin bekannt, daß die Anwendung von Gemischen aktiver Stoffe besondere Vorteile bringen kann, zumal die Anwendung der einzelnen Wirkstoffe meist nicht befriedigt.

Es wurde nun gefunden, daß herbizide Mittel, die als aktive Bestandteile eine Mischung aus 1-(3-Chlor-4,5,6,7-tetrahydropyrazolo-[1,5-a]-pyridin-2-yl)-5-(methylpropargylamino)-4-pyrazolylcarbonsäurenitril  [Komponente (A)] und einem anderen Herbizid aus der Gruppe Bentazone, Molinate, Daimuron, Thiobencarb, Butachlor, Pretilachlor, Dimepiperate, Fenoxaprop-ethyl, Clomeprop, Cinmethylin, Bromobutide, Quinclorac, Mefenacet, Pyrazosulfuron-ethyl, Esprocarb, Cinosulfuron, Thenylchlor, Cumyluron, MK 243, Naproanilide, Anilofos, Benfuresate, Bifenox, CH-900, MCPA, Nitrofen, Oxadiazon, Pendimethalin, Simetryn, Sulcotrione (ICIA0051), Trifluralin, Piperophos, Pyributicarb, Ethoxysulfuron, Bensulfuronmethyl, Pyrazolate, Pyrazoxyfen, Benzofenap, Cyclosulfamuron, Cyhalofop-butyl, NBA-061, Azimsulfuron, Propanil oder Imazosulfuron [Komponente (B)] enthalten, eine besonders hohe herbizide Wirkung aufweisen, ohne die selektiven Eigenschaften gegenüber landwirtschaftlichen Kulturpflanzen, wie Reis, zu verlieren, und zum Teil sogar die Kulturpflanzenverträglichkeit eindeutig verbessern.

Die Wirkstoffe der Komponente (B) sind mit Ausnahme von Cumyluron und NBA-061 beispielsweise aus The Pesticidal Manual, 10. Aufl. (1994), Brit. Crop Prot.

Council, London, und The Royal Soc. of Chem., Cambridge, bekannt. Cumyluron selbst wurde u.a. in Agrochem. Jpn., 63, 18-19, 1993 (Konnai et al.) beschrieben und NBA-061 in DE 504059, EP 612735 and EP 726259.

Überraschenderweise ist die herbizide Wirkung der erfindungsgemäßen Wirkstoffkombinationen wesentlich höher als die der Einzelkomponenten und auch als die Summe der Einzelkomponenten. Es liegt somit ein synergistischer Effekt vor.

Die erfindungsgemäßen Wirkstoffkombinationen können zum Beispiel zur Bekämpfung folgender Pflanzen verwendet werden:

Dikotyle Unkräuter der Gattungen Lindernia, Rotala, Mimosa, Heteranthera, Sinapis, Galium, Stellaria, Matricaria, Galinsoga, Chenopodium, Brassica, Urtica, Senecio, Amaranthus, Portulaca, Xanthium, Convolvulus, Ipomea, Polygonum, Sesbania, Cirsium, Carduus, Sonchus, Solanum, Lamium, Veronica, Abutilon, Datura und Viola sowie monokotyle Unkräuter der Gattungen Alisma, Avena, Alopecurus, Echinochloa, Setaria, Scirpus, Panicum, Digitaria, Poa, Eleusine, Brachiaria, Lolium, Bromus, Cyperus, Agropyron, Sagittaria, Monochoria, Fimbristylis, Eleocharis, Ischaemum, Potamogeton, Eichhornia und Apera.

Der Einsatz der erfindungsgemäßen Mischungen erfolgt im Nachauflaufverfahren durch Direktapplikation, wie z.B. durch Spritzung auf die Pflanzen oder auch im Vorauflaufverfahren durch Direktapplikation in das Paddy-Wasser beziehungsweise durch Spritzung. Eine selektive Anwendung ist in einer Reihe von Kulturanwendungen möglich, wobei Reis bevorzugt ist. Die Aufwandmenge liegt zwischen 0,001 und 5 kg/ha für die Summe der Mischungspartner je nach dem Anwendungsziel.

Das Gewichtsverhältnis der Komponente (A) zur Komponente (B) in der Mischung liegt zwischen 1 : 0,1 und 1 : 100, vorzugsweise 1 : 0,5 und 1 : 50.

Die erfindungsgemäßen Mittel können gegebenenfalls auch in Mischung mit anderen Wirkstoffen, zum Beispiel sonstigen Pflanzenschutz- oder Schädlingsbekämpfungsmitteln, je nach dem gewünschten Zweck verwendet werden.

Eine Förderung der Wirkintensität und der Wirkgeschwindigkeit kann außerdem zum Beispiel durch wirkungssteigernde Zusätze, wie organische Lösungsmittel, Netzmittel und Öle erzielt werden. Solche Zusätze lassen daher gegebenfalls eine weitere Verringerung der Wirkstoffdosierung zu.

Zweckmäßig werden die erfindungsgemäßen Mittel in Form von Zubereitungen, wie Pulvern, Streumitteln, Granulaten, Lösungen, Emulsionen oder Suspensionen, unter Zusatz von flüssigen und/oder festen Trägerstoffen beziehungsweise Verdünnungsmitteln und gegebenenfalls Haft-, Netz-, Emulgier- und/oder Dispergierhilfsmitteln angewandt.

Geeignete flüssige Trägerstoffe sind zum Beispiel aliphatische und aromatische Kohlenwasserstoffe, wie Toluol, Xylol, aber auch Cyclohexanon, Isophoron, Dimethylsulfoxid, Dimethylformamid, weiterhin Mineralölfraktionen und pflanzliche Öle.

Als feste Trägerstoffe eignen sich Mineralien, zum Beispiel Bentonit, Silicagel, Talkum, Kaolin, Attapulgit, Kalkstein und pflanzliche Produkte, zum Beispiel Mehle.

An oberflächenaktiven Stoffen sind zu nennen zum Beispiel Calciumligninsulfonat, Polyethylenalkyl-phenylether, Naphthalinsulfonsäure und deren Salze, Phenolsulfonsäuren und deren Salze, Formaldehydkondensate, Fettalkoholsulfonate sowie substituierte Benzolsulfonsäuren und deren Salze.

Der Anteil der Wirkstoffe in den verschiedenen Zubereitungen kann in weiten Grenzen variiert werden. Beispielsweise enthalten die Mittel etwa 10 bis 90 Gewichtsprozent Wirkstoffe, etwa 90 bis 1 0 Gewichtsprozente flüssige oder feste Trägerstoffe sowie gegebenenfalls bis zu 20 Gewichtsprozent oberflächenaktive Stoffe.

Die Ausbringung der Mittel kann in üblicher Weise erfolgen, zum Beispiel mit Wasser als Träger in Spritzbrühmengen von etwa 100 bis 1000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Die Herstellung dieser Zubereitungen kann in an sich bekannter Art und Weise, zum Beispiel durch Mahl- oder Mischverfahren, durchgeführt werden. Gewünschtenfalls können Zubereitungen der Einzelkomponenten auch erst kurz vor ihrer Verwendung gemischt werden, wie es zum Beispiel im sogenannten Tankmixverfahren in der Praxis durchgeführt wird.

Die folgenden Beispiele dienen zur Erläuterung der Anwendung der erfindungsgemäßen Mittel.

Die Berechnung des synergistischen Effektes erfolgte nach S.R. Colby"Calculating Synergistic and Antagonistic Responses of Herbicide Combinations" Weeds 15/1 (1967) Seite 20 bis 22.

Dazu wurde die folgende Formel benutzt:

$$E = X + Y - \frac{XY}{100},$$

wobei

X = die herbizide Wirkung (%) bei Anwendung der Substanz A mit p g/ha
Y = die herbizide Wirkung (%) bei Anwendung der Substanz B mit q g/ha und
E = bei additiver Wirkung zu erwartende herbizide Wirkung (%) bei Anwendung der Substanzen A + B mit p + q g/ha bedeuten.

War der beobachtete Wert größer als der nach Colby berechnete Wert E, so hatte die Kombination eine synergistische Wirkung.

Methodenbeschreibung

Quadratische Schalen mit einer Kantenlänge von 13,5 cm und einer Höhe von 8,0 cm werden mit 900 ml Erdmischung gefüllt. In die Schalen werden nach einem vorgegebenen Schema die folgenden Spezies eingesät bzw. gepflanzt:

| Spezies | Aussaatmenge | BAYER-code |
|---|---|---|
| Orysa sativa | 4 Samen | ORYSW |
| Oryza sativa (3cm tief) | 3 Pflanzen | ORYSA |
| Oryza sativa (1cm tief) | 2 Pflanzen | ORYSP |
| Echinocloa crus-galli | ca. 20 Samen | ECHCG |
| Echinocloa crus-galli (E) | ca. 20 Samen | ECHCG (E = Europa) |
| Echinocloa crus galli (US) | ca. 20 Samen | ECHCG (US = U.S.A.) |
| Cyperus serotinus | 3 Knollen | CYPSE |
| Scirpus juncoides | ca. 30 Samen | SCPJU |
| Sagittaria pygmaea | 3 Knollen | SAGPY |
| Monochoria vaginalis | 4 Nodien | MOOVA |
| Cyperus difformis | ca. 80 Samen | CYPDI |
| Paspalum distichum | 4 Knoten | PASDS |

Die Schalen stehen während der gesamten Versuchszeit im Gewächshaus bei einer Temperatur zwischen 25°C tagsüber und 20°C nachts. Die Luftfeuchtigkeit liegt zwischen 60 und 80%. Bei einer Tageslänge von 14 Stunden erhalten die Pflanzen mindestens 10.000 Lux.

Die Prüfsubstanzen werden je nach Wirkungsgrad in drei unterschiedlichen Konzentrationen getestet.

Im Vorauflaufverfahren werden die Prüfsubstanzen durch Sprühen auf die eingesäten Pflanzen appliziert, so daß sich umgerechnet die Dosierungen pro Hektar ergeben, wie sie in den Tabellen angegeben sind.

Beim Nachauflaufverfahren werden in die erste Schale ECHCG , SCPJU, MOOVA und SAGPY gesät und in die zweite CYPDI und CYPSE sowie die vorgekeimten Saatreissamen gegeben. Nach einem Tag werden die Schalen mit Klarsichtfolie abgedeckt, um ein Austrocknen zu verhindern.

Drei Tage vor der Applikation werden in die zweite Schale je drei Reispflanzen, die sich im 2.5 Blattstadium befinden, 3cm bzw. 1cm tief eingepflanzt. Sobald sich die Echinochloa crus-galli im 1.0 Blattstadium befindet, wird der Wirkstoff bzw. die Mischung appliziert. Der Wasserstand wird auf 1-2 cm erhöht.

Die Prüfsubstanzen werden durch Pipettieren auf eine Wasseroberfläche von ca. 170 cm$^2$ appliziert, so daß sich umgerechnet die Dosierungen pro Hektar ergeben, wie sie in den Tabellen angegeben sind.

Beispiel 1

Mischungen von (A) mit Bifenox (B1)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B1) in den Aufwandmengen 50 / 100 / 200 g/ha eingesetzt.

Synergistische Effekte wurden bei ECHCG (E), CYPSE, MOOVA und SCPJU gefunden, wie aus nachfolgender Tabelle 1 zu ersehen ist.

Tabelle 1

| Komponente/Spezies | | ECHCG (E) | | CYPSE | | MOOVA | | SCPJU | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 60 | | 35 | | 90 | | 20 | |
| | 25 | 80 | | 40 | | 95 | | 30 | |
| | 50 | 95 | | 80 | | 100 | | 65 | |
| B1 | 50 | 0 | | 0 | | 65 | | 0 | |
| | 100 | 0 | | 0 | | 70 | | 0 | |
| | 200 | 0 | | 0 | | 75 | | 0 | |
| A+B1 | 12,5+50 | 60 | 60,0 | 35 | 35,0 | 95 | 96,5 | 25 | 20,0 |
| | 25+50 | 75 | 80,0 | 60 | 40,0 | 100 | 98,3 | 40 | 30,0 |
| | 50+50 | 98 | 95,0 | 75 | 80,0 | 100 | 100,0 | 65 | 65,0 |
| | 12,5+100 | 65 | 60,0 | 40 | 35,0 | 98 | 97,0 | 30 | 20,0 |
| | 25+100 | 85 | 80,0 | 60 | 40,0 | 100 | 98,5 | 60 | 30,0 |
| | 50+100 | 98 | 95,0 | 80 | 80,0 | 100 | 100,0 | 70 | 65,0 |
| | 12,5+200 | 60 | 60,0 | 35 | 35,0 | 100 | 97,5 | 30 | 20,0 |
| | 25+200 | 90 | 80,0 | 40 | 40,0 | 100 | 98,8 | 70 | 30,0 |
| | 50+200 | 95 | 95,0 | 85 | 80,0 | 100 | 100,0 | 75 | 65,0 |

Beispiel 2

Mischungen von (A) mit CH-900 (B2)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B2) in den Aufwandmengen 12,5 / 25 / 50 g/ha eingesetzt.

Synergistische Effekte wurden bei ECHCG (E), SAGPY, SCPJU und CYPDI gefunden, wie aus nachfolgender Tabelle 2 zu ersehen ist.

Tabelle 2

| Komponente/Spezies | | ECHCG (E) | | SAGPY | | SCPJU | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 10 | | 10 | | 20 | | 0 | |
| | 25 | 75 | | 65 | | 40 | | 20 | |
| | 50 | 90 | | 70 | | 60 | | 30 | |
| B2 | 12,5 | 40 | | 10 | | 0 | | 0 | |
| | 25 | 70 | | 20 | | 25 | | 95 | |
| | 50 | 98 | | 25 | | 50 | | 98 | |
| A+B2 | 12.5+12,5 | 20 | 46,0 | 10 | 19,0 | 20 | 20,0 | 40 | 0,0 |
| | 25+12,5 | 40 | 85,0 | 60 | 68,5 | 65 | 40,0 | 60 | 20,0 |
| | 50+12,5 | 90 | 94,0 | 70 | 73,0 | 70 | 60,00 | 100 | 30,0 |
| | 12,5+25 | 60 | 73,0 | 30 | 28,0 | 60 | 40,0 | 40 | 95,0 |
| | 25+25 | 65 | 92,5 | 40 | 72,0 | 70 | 55,0 | 80 | 96,0 |
| | 50+25 | 98 | 97,0 | 100 | 76,0 | 75 | 70,00 | 95 | 96,5 |
| | 12,5+50 | 100 | 98,2 | 40 | 32,5 | 60 | 60,0 | 90 | 98,0 |
| | 25+50 | 100 | 99,5 | 50 | 73,8 | 65 | 70,0 | 100 | 98,4 |
| | 50+50 | 100 | 99,8 | 90 | 77,5 | 75 | 80,00 | 100 | 98,6 |

Beispiel 3

Mischungen von (A) mit MCPA (B3)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B3) in den Aufwandmengen 50 / 100 / 200 g/ha eingesetzt.
Synergistische Effekte wurden bei den beiden ECHCG-Arten, CYPSE, SCPJU und CYPDI gefunden, wie aus nachfolgender Tabelle 3 zu ersehen ist.

Tabelle 3

| Komponente/ Spezies | | ECHCG(E) | | ECHCG (US) | | CYPSE | | SCPJU | | CYPDI | |
|---|---|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) | Wrkg (%) | Colby (%) |
| A | 12,5 | 75 | | 50 | | 30 | | 10 | | 5 | |
| | 25 | 95 | | 90 | | 35 | | 40 | | 20 | |
| | 50 | 100 | | 100 | | 85 | | 75 | | 25 | |
| B3 | 50 | 0 | | 0 | | 30 | | 0 | | 0 | |
| | 100 | 20 | | 20 | | 40 | | 10 | | 10 | |
| | 200 | 30 | | 60 | | 60 | | 40 | | 100 | |
| A+B3 | 12,5+50 | 80 | 75,0 | 75 | 50,0 | 45 | 51,0 | 20 | 10,0 | 10 | 5,0 |
| | 25+50 | 98 | 95,0 | 95 | 90,0 | 75 | 54,5 | 45 | 40,0 | 20 | 20,0 |
| | 50+50 | 100 | 100,0 | 100 | 100,0 | 90 | 89,5 | 80 | 75,0 | 30 | 25,0 |

Tabelle 3   (fortgesetzt)

| Komponente/ Spezies | | ECHCG(E) | | ECHCG (US) | | CYPSE | | SCPJU | | CYPDI | |
|---|---|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) | Wrkg (%) | Colby (%) |
| | 12,5+100 | 85 | 80,0 | 75 | 60,0 | 60 | 58,0 | 25 | 19,0 | 70 | 14,5 |
| | 25+100 | 95 | 96,0 | 95 | 92,0 | 65 | 61,0 | 60 | 46,0 | 80 | 28,0 |
| | 50+100 | 100 | 100,0 | 100 | 100,0 | 90 | 91,0 | 90 | 77,5 | 95 | 32,5 |
| | 12,5+200 | 85 | 82,5 | 75 | 80,0 | 75 | 72,0 | 75 | 46,0 | 90 | 100,0 |
| | 25+200 | 98 | 96,5 | 95 | 96,0 | 80 | 74,0 | 84 | 64,0 | 95 | 100,0 |
| | 50+200 | 100 | 100,0 | 100 | 100,0 | 95 | 94,0 | 95 | 85,0 | 100 | 100,0 |

Beispiel 4

Mischungen von (A) mit Nitrofen (B4)

Für den Versuch wurde 1-(3-Chlor-4,5,6,7-tetrahydropyrazolo-[1,5-a]-pyridin-2-yl)-5-methyl-propargylamino)-4-pyrazolylcarbonsäurenitril (A) in den Aufwandmengen 12,5 / 25 / 50 g/ha und (B4) in den Aufwandmengen 25 / 50 / 200 g/ha eingesetzt.

Synergistische Effekte wurden bei ECHCG, SAGPY, SCPJU und CYPDI gefunden, wie aus nachfolgender Tabelle 4 zu ersehen ist.

Tabelle 4

| Komponente/Spezies | | ECHCG | | SAGPY | | SCPJU | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 10 | | 10 | | 15 | | 0 | |
| | 25 | 20 | | 20 | | 30 | | 10 | |
| | 50 | 90 | | 60 | | 60 | | 30 | |
| B4 | 25 | 0 | | 5 | | 0 | | 0 | |
| | 50 | 25 | | 10 | | 20 | | 20 | |
| | 100 | 80 | | 20 | | 30 | | 25 | |
| A+B4 | 12,5+25 | 40 | 10,0 | 10 | 14,5 | 20 | 15,0 | 20 | 0,0 |
| | 25+25 | 80 | 20,0 | 25 | 24,0 | 25 | 30,0 | 30 | 10,0 |
| | 50+25 | 85 | 90,0 | 65 | 62,0 | 60 | 60,0 | 60 | 30,0 |
| | 12,5+50 | 70 | 32,5 | 20 | 19,0 | 30 | 32,0 | 20 | 20,0 |
| | 25+50 | 65 | 40,0 | 25 | 28,0 | 40 | 44,0 | 75 | 28,0 |
| | 50+50 | 98 | 92,5 | 70 | 64,0 | 70 | 68,0 | 80 | 44,0 |
| | 12,5+200 | 75 | 82,0 | 30 | 28,0 | 40 | 40,5 | 20 | 25,0 |
| | 25+200 | 80 | 84,0 | 50 | 36,0 | 65 | 51,0 | 80 | 32,5 |
| | 50+200 | 90 | 98,0 | 70 | 68,0 | 75 | 72,0 | 90 | 47,5 |

Beispiel 5

Mischungen von (A) mit Oxadiazon (B5)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B5) in den Aufwandmengen 125 / 250 / 500 g/ha eingesetzt.

Synergistische Effekte wurden bei ECHCG (E), CYPSE, SAGPY und SCPJU gefunden, wie aus nachfolgender Tabelle 5 zu ersehen ist.

Tabelle 5

| Komponente/Spezies | | ECHCG (E) | | CYPSE | | SAGPY | | SCPJU | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 60 | | 30 | | 10 | | 10 | |
| | 25 | 90 | | 45 | | 20 | | 40 | |
| | 50 | 100 | | 80 | | 85 | | 60 | |
| B5 | 125 | 90 | | 5 | | 0 | | 20 | |
| | 250 | 100 | | 10 | | 10 | | 30 | |
| | 500 | 100 | | 20 | | 20 | | 70 | |
| A+B5 | 12,5+125 | 98 | 96,0 | 35 | 33,5 | 10 | 10,0 | 30 | 28,0 |
| | 25+125 | 100 | 99,0 | 40 | 47,8 | 20 | 20,0 | 50 | 52,0 |
| | 50+125 | 100 | 100,0 | 90 | 81,0 | 85 | 85,0 | 80 | 68,0 |
| | 12,5+250 | 100 | 100,0 | 75 | 37,0 | 30 | 19,0 | 35 | 37,0 |
| | 25+250 | 100 | 100,0 | 85 | 50,5 | 35 | 28,0 | 50 | 58,0 |
| | 50+250 | 100 | 100,0 | 95 | 82,0 | 85 | 86,5 | 80 | 72,0 |
| | 12,5+500 | 100 | 100,0 | 75 | 44,0 | 70 | 28,0 | 70 | 73,0 |
| | 25+500 | 100 | 100,0 | 90 | 56,0 | 80 | 36,0 | 80 | 82,0 |
| | 50+500 | 100 | 100,0 | 95 | 84,0 | 90 | 88,0 | 90 | 88,0 |

Beispiel 6

Mischungen von (A) mit Pendimethalin (B6)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B6) in den Aufwandmengen 50 / 100 / 200 g/ha eingesetzt.

Synergistische Effekte wurden bei ECHCG (US), CYPSE, SAGPY und CYPDI gefunden, wie aus nachfolgender Tabelle 6 zu ersehen ist.

Tabelle 6

| Komponente/Spezies | | ECHCG (US) | | CYPSE | | SAGPY | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 35 | | 30 | | 50 | | 0 | |
| | 25 | 80 | | 35 | | 55 | | 0 | |
| | 50 | 97 | | 80 | | 70 | | 90 | |

Tabelle 6 (fortgesetzt)

| Komponente/Spezies | | ECHCG (US) | | CYPSE | | SAGPY | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| B6 | 50 | 98 | | 0 | | 60 | | 30 | |
| | 100 | 99 | | 0 | | 25 | | 35 | |
| | 200 | 99 | | 0 | | 30 | | 70 | |
| A+B6 | 12,5+50 | 97 | 98,7 | 30 | 30,0 | 25 | 80,0 | 30 | 30,0 |
| | 25+50 | 98 | 99,6 | 50 | 35,0 | 50 | 82,0 | 45 | 30,0 |
| | 50+50 | 100 | 99,9 | 60 | 80,0 | 98 | 88,0 | 70 | 93,0 |
| | 12,5+100 | 100 | 99,4 | 45 | 30,0 | 25 | 62,5 | 50 | 35,0 |
| | 25+100 | 100 | 99,8 | 55 | 35,0 | 55 | 66,3 | 60 | 35,0 |
| | 50+100 | 100 | 100,0 | 75 | 80,0 | 90 | 77,5 | 75 | 93,5 |
| | 12,5+200 | 100 | 99,4 | 45 | 30,0 | 30 | 65,0 | 55 | 70,0 |
| | 25+200 | 100 | 99,8 | 70 | 35,0 | 55 | 68,5 | 65 | 70,0 |
| | 50+200 | 100 | 100,0 | 75 | 80,0 | 95 | 79,0 | 80 | 97,0 |

Beispiel 7

Mischungen von (A) mit Simetryn (B7)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B7) in den Aufwandmengen 50 / 100 / 200 g/ha eingesetzt.

Synergistische Effekte wurden bei CYPSE, SAGPY, SCPJU und CYPDI gefunden, wie aus nachfolgender Tabelle 7 zu ersehen ist.

Tabelle 7

| Komponente/Spezies | | CYPSE | | SAGPY | | SCPJU | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 20 | | 30 | | 20 | | 0 | |
| | 25 | 30 | | 40 | | 40 | | 10 | |
| | 50 | 70 | | 70 | | 60 | | 75 | |
| B7 | 50 | 0 | | 0 | | 0 | | 20 | |
| | 100 | 10 | | 0 | | 0 | | 95 | |
| | 200 | 20 | | 20 | | 10 | | 100 | |
| A+B7 | 12,5+50 | 30 | 20,0 | 65 | 30,0 | 20 | 20,0 | 90 | 20,0 |
| | 25+50 | 40 | 30,0 | 70 | 40,0 | 40 | 40,0 | 95 | 28,0 |
| | 50+50 | 75 | 70,0 | 75 | 70,0 | 65 | 60,0 | 100 | 80,0 |
| | 12,5+100 | 30 | 28,0 | 60 | 30,0 | 20 | 20,0 | 100 | 95,0 |
| | 25+100 | 85 | 37,0 | 75 | 40,0 | 45 | 40,0 | 100 | 95,5 |
| | 50+100 | 90 | 73,0 | 80 | 70,0 | 65 | 60,0 | 100 | 98,9 |
| | 12,5+200 | 65 | 36,0 | 75 | 44,0 | 30 | 28,0 | 100 | 100,0 |

Tabelle 7 (fortgesetzt)

| Komponente/Spezies | | CYPSE | | SAGPY | | SCPJU | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| | 25+200 | 70 | 44,0 | 80 | 52,0 | 50 | 46,0 | 100 | 100,0 |
| | 50+200 | 75 | 76,0 | 100 | 76,0 | 70 | 64,00 | 100 | 100,0 |

Beispiel 8

Mischungen von (A) mit Sulcotrione (B8)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B8) in den Aufwandmengen 25 / 50 /1 00 g/ha eingesetzt.
Synergistische Effekte wurden bei beiden ECHCG-Arten, SAGPY, SCPJU und CYPDI gefunden, wie aus nachfolgender Tabelle 8 zu ersehen ist.

Tabelle 8

| Komponente/ Spezies | | ECHCG (E) | | ECHCG (US) | | SAGPY | | SCPJU | | CYPDI | |
|---|---|---|---|---|---|---|---|---|---|---|---|
| A/B | Menge (g/ ha) | Wrkg (%) | Colby (%) | Wrkg (%) | Colby (%) | Wrkg (%) | Colby (%) | Wrkg (%) | Colby (%) | Wrkg (%) | Colby (%) |
| A | 12,5 | 95 | | 45 | | 10 | | 10 | | 0 | |
| | 25 | 98 | | 85 | | 25 | | 35 | | 10 | |
| | 50 | 99 | | 100 | | 98 | | 60 | | 20 | |
| B8 | 25 | 90 | | 25 | | 55 | | 30 | | 20 | |
| | 50 | 100 | | 70 | | 85 | | 40 | | 75 | |
| | 10 | 100 | | 96 | | 98 | | 60 | | 80 | |
| A+B8 | 12,5+25 | 100 | 99,5 | 75 | 58,8 | 85 | 59,5 | 70 | 37,0 | 80 | 20,0 |
| | 25+25 | 100 | 99,8 | 98 | 88,8 | 90 | 66,3 | 80 | 54,5 | 85 | 28,0 |
| | 50+25 | 100 | 99,9 | 100 | 100 | 95 | 99,1 | 85 | 72,0 | 75 | 36,0 |
| | 12,5+50 | 100 | 100 | 90 | 83,5 | 90 | 86,5 | 80 | 46,0 | 75 | 75,0 |
| | 25+50 | 100 | 100 | 100 | 95,5 | 95 | 88,8 | 85 | 61,0 | 100 | 77,5 |
| | 50+50 | 100 | 100 | 100 | 100 | 97 | 99,7 | 90 | 76,0 | 80 | 80,0 |
| | 12,5+100 | 100 | 100 | 100 | 97,8 | 98 | 98,2 | 80 | 64,0 | 85 | 80,0 |
| | 25+100 | 100 | 100 | 100 | 99,4 | 99 | 98,5 | 85 | 74,0 | 90 | 82,0 |
| | 50+100 | 100 | 100 | 100 | 100 | 100 | 100 | 90 | 84,0 | 95 | 84,0 |

Beispiel 9

Mischungen von (A) mit Trifluralin (B9)

Für den Versuch wurde 1-(3-Chlor-4,5,6,7-tetrahydropyrazolo-[1,5-a]-pyridin-2-yl)-5-(methyl-propargylamino)-4-pyrazolylcarbonsäurenitril (A) in den Aufwandmengen 12,5 / 25 / 50 g/ha und (B9) in den Aufwandmengen 250 / 500 / 1 000 g/ha eingesetzt.
Synergistische Effekte wurden bei ECHCG (E), CYPSE, SAGPY und CYPDI gefunden, wie aus nachfolgender Tabelle 9 zu ersehen ist.

Tabelle 9

| Komponente/Spezies | | ECHCG (E) | | CYPSE | | SAGPY | | CYPDI | |
|---|---|---|---|---|---|---|---|---|---|
| A/B | Menge (g/ha) | Wrkg (%) | Colby (%) | Wrkg (%) | Colby (%) | Wrkg (%) | Colby (%) | Wrkg (%) | Colby (%) |
| A | 12,5 | 75 | | 30 | | 30 | | 0 | |
| | 25 | 90 | | 45 | | 35 | | 20 | |
| | 50 | 100 | | 80 | | 60 | | 30 | |
| B9 | 250 | 95 | | 0 | | 10 | | 60 | |
| | 500 | 95 | | 0 | | 10 | | 75 | |
| | 1000 | 100 | | 10 | | 20 | | 80 | |
| A+B9 | 12,5+250 | 95 | 98,8 | 30 | 30,0 | 30 | 37,0 | 75 | 60,0 |
| | 25+250 | 100 | 95,5 | 40 | 45,0 | 35 | 41,5 | 85 | 68,0 |
| | 50+250 | 100 | 100,0 | 80 | 80,0 | 70 | 64,0 | 90 | 72,0 |
| | 12,5+500 | 100 | 98,8 | 30 | 30,0 | 30 | 37,0 | 80 | 75,0 |
| | 25+500 | 100 | 99,5 | 60 | 45,0 | 40 | 41,5 | 85 | 80,0 |
| | 50+500 | 100 | 100,0 | 80 | 80,0 | 75 | 64,0 | 90 | 82,5 |
| | 12,5+1000 | 100 | 100,0 | 30 | 37,0 | 30 | 44,0 | 70 | 80,0 |
| | 25+1000 | 100 | 100,0 | 70 | 50,5 | 50 | 48,0 | 85 | 84,0 |
| | 50+1000 | 100 | 100,0 | 85 | 82,0 | 75 | 68,0 | 95 | 86,0 |

Beispiel 10

Mischungen von (A) mit Bentazone (B10)

Für den Versuch wurde Bentazone in den Aufwandmengen 250 / 500 / 1000 g/ha und (A) in den Aufwandmengen 25 / 50 / 100 g/ha eingesetzt.

Ein synergistischer Effekt zeigte sich bei den Mischungsverhältnissen 25g/ha (A) +250 / 500 / 1000 g/ha Bentazone, wie aus nachfolgender Tabelle 10 zu ersehen ist.

Tabelle 10

| Dosierung 1 (A) | Dosierung 2 Bentazone | CYPDI | | |
|---|---|---|---|---|
| | | Wirkung | nach Colby | Synergismus |
| 25,0 g/ha 50,0 g/ha 100,0 g/ha | | 10,0 % 100,0 % 100,0 % | | |
| | 250,0 g/ha 500,0 g/ha 1000,0 g/ha | 0,0 % 10,0 % 20,0 % | | |
| 25,0 g/ha 50,0 g/ha 100,0 g/ha | 250,0 g/ha 250,0 g/ha 250,0 g/ha | 100,0 % 100,0 % 100,0 % | 10,0 % 100,0 % 100,0 % | + |
| 25,0 g/ha 50,0 g/ha 100,0 g/ha | 500,0 g/ha 500,0 g/ha 500,0 g/ha | 100,0 % 100,0 % 100,0 % | 19,0 % 100,0 % 100,0 % | + |
| 25,0 g/ha | 1000,0 g/ha | 100,0 % | 28,0 % | + |

Tabelle 10   (fortgesetzt)

| Dosierung 1 (A) | Dosierung 2 Bentazone | CYPDI | | |
|---|---|---|---|---|
| | | Wirkung | nach Colby | Synergismus |
| 50,0 g/ha | 1000,0 g/ha | 100,0 % | 100,0 % | |
| 100,0 g/ha | 1000,0 g/ha | 100,0 % | 100,0 % | |

Beispiel 11

Mischungen von (A) mit Molinate (B11)

Für den Versuch wurde Molinate in den Aufwandmengen : 250 / 500 / 1000 g/ha und (A) in den Aufwandmengen: 25 / 50 / 100 g/ha eingesetzt.

Ein synergistischer Effekt wurde mit den angewendeten Mischungsverhältnissen bei der europäischen und der amerikanischen Echinochloa crus-galli sowie bei den Cyperus-Spezies CYPSE und CYPDI gefunden, bei denen der Anteil von (A) geringer war als der der Mischungskomponente (B11), wie in den nachfolgenden Tabellen 11 A und 11 B zu sehen ist.

Tabelle 11A

| Dosierung 1 (A) | Dosierung 2 Molinate | ECHCG/europäisch | | | ECHCG/amerikanisch | | |
|---|---|---|---|---|---|---|---|
| | | Wirkung | nach Colby | Synergismus | Wirkung | nach Colby | Synergismus |
| 25,0 g/ha | | 80,0% | | | 60,0% | | |
| 50,0 g/ha | | 99,0% | | | 100,0% | | |
| 100,0 g/ha | | 100,0% | | | 100,0% | | |
| | 250,0 g/ha | 10,0% | | | 20,0% | | |
| | 500,0 g/ha | 65,0% | | | 65,0% | | |
| | 1000,0 g/ha | 80,0% | | | 80,0% | | |
| 25,0 g/ha | 250,0 g/ha | 100,0% | 82,0 % | + | 100,0% | 68,0 % | + |
| 50,0 g/ha | 250,0 g/ha | 100,0% | 99,1 % | + | 100,0% | 100,0 % | |
| 100,0 g/ha | 250,0 g/ha | 100,0% | 100,0 % | | 100,0% | 100,0 % | |
| 25,0 g/ha | 500,0 g/ha | 100,0% | 93,0 % | + | 100,0% | 86,0 % | + |
| 50,0 g/ha | 500,0 g/ha | 100,0% | 99,7 % | + | 100,0% | 100,0 % | |
| 100,0 g/ha | 500,0 g/ha | 100,0% | 100,0 % | | 100,0% | 100,0 % | |
| 25,0 g/ha | 1000,0 g/ha | 100,0% | 96,0 % | + | 100,0% | 92,0 % | + |
| 50,0 g/ha | 1000,0 g/ha | 100,0% | 99,8 % | + | 100,0% | 100,0 % | |
| 100,0 g/ha | 1000,0 g/ha | 100,0% | 100,0% | | 100,0% | 100,0 % | |

Tabelle 11 B

| Dosierung (A) | 1 Dosierung 2 Molinate | CYPSE | | | CYPDI | | |
|---|---|---|---|---|---|---|---|
| | | Wirkung | nach Colby | Synergismus | Wirkung | nach Colby | Synergismus |
| 25,0 g/ha | | | | | 50,0 % | | |
| 50.0 g/ha | | 20,0 % | | | 98,0 % | | |
| 100,0 g/ha | | 100.0 % | | | 100.0 % | | |

Tabelle 11 B   (fortgesetzt)

| Dosierung (A) | 1 Dosierung 2 Molinate | CYPSE | | | CYPDI | | |
|---|---|---|---|---|---|---|---|
| | | Wirkung | nach Colby | Synergismus | Wirkung | nach Colby | Synergismus |
| | 250,0 g/ha | 50,0 % | | | 85,0 % | | |
| | 500,0 g/ha | 60,0 % | | | 90,0 % | | |
| | 1000,0 g/ha | 70,0 % | | | 92,0 % | | |
| 25,0 g/ha | 250,0 g/ha | 95,0 % | 50,0 % | + | 85,0 % | 92,5 % | |
| 50,0 g/ha | 250,0 g/ha | 97,0 % | 60,0 % | + | 92,0 % | 99,7 % | |
| 100,0 g/ha | 250,0 g/ha | 98,0 % | 100,0 % | | 100,0 % | 100,0 % | |
| 25,0 g/ha | 500,0 g/ha | 30,0 % | 60,0 % | | 100,0 % | 95,0 % | + |
| 50,0 g/ha | 500,0 g/ha | 50,0 % | 68,0 % | | 100,0 % | 99,8 % | + |
| 100,0 g/ha | 500,0 g/ha | 100,0 % | 100,0 % | | 100,0 % | 100,0 % | |
| 25,0 g/ha | 1000,0 g/ha | 98,0 % | 70,0 % | + | 100,0 % | 96,0 % | + |
| 50,0 g/ha | 1000,0 g/ha | 100,0 % | 76,0 % | + | 100,0 % | 99,8 % | + |
| 100,0 g/ha | 1000,0 g/ha | 100,0 % | 100,0 % | | 100,0 % | 100,0 % | |

Beispiel 12

Mischungen von (A) mit Daimuron (B12)

Für den Versuch wurde Daimuron in den Aufwandmengen 200 / 400 / 800 g/ha und ( A ) in den Aufwandmengen 25 / 50 / 100 g/ha eingesetzt.

Ein synergistischer Effekt wurde für verschiedene Mischungsverhältnisse bei ECHCG (E), bei den Cyperus-Spezies CYPSE und CYPDI sowie bei SAGPY gefunden, wie aus den nachfolgenden Tabellen 12A, 12B und 12C zu entnehmen ist.

Tabelle 12A

| Dosierung 1 (A) | Dosierung 2 Daimuron | ECHCG(europäisch) | | |
|---|---|---|---|---|
| | | Wirkung | nach Colby | Synergismus |
| 25,0 g/ha | | 75,0 % | | |
| 50,0 g/ha | | 98,0 % | | |
| 100,0 g/ha | | 100,0 % | | |
| | 200,0 g/ha | 25,0 % | | |
| | 400,0 g/ha | 25,0 % | | |
| | 800,0 g/ha | 65,0 % | | |
| 25,0 g/ha | 200,0 g/ha | 70,0 % | 81,3 % | |
| 50,0 g/ha | 200,0 g/ha | 99,0 % | 98,5 % | + |
| 100,0 g/ha | 200,0 g/ha | 100,0 % | 100,0 % | |
| 25,0 g/ha | 400,0 g/ha | 90,0 % | 81,3 % | + |
| 50,0 g/ha | 400,0 g/ha | 100,0 % | 98,5 % | + |
| 100,0 g/ha | 400,0 g/ha | 100,0 % | 100,0 % | |
| 25,0 g/ha | 800,0 g/ha | 80,0 % | 91,3 % | |
| 50,0 g/ha | 800,0 g/ha | 100,0 % | 99,3 % | + |
| 100,0 g/ha | 800,0 g/ha | 100,0 % | 100,0 % | |

Tabelle 12B

| Dosierung 1 (A) | Dosierung 2 Daimuron | CYPSE | | | CYPDI | | |
|---|---|---|---|---|---|---|---|
| | | Wirkung | nach Colby | Synergismus | Wirkung | nach Colby | Synergismus |
| 25,0 g/ha | | | | | 60,0% | | |
| 50,0 g/ha | | 70,0% | | | 80,0% | | |
| 100,0 g/ha | | 100,0% | | | 100,0% | | |
| | 200,0 g/ha | 10,0% | | | 0,0% | | |
| | 400,0 g/ha | 30,0% | | | 20,0% | | |
| | 800,0 g/ha | 65,0% | | | 90,0% | | |
| 25,0 g/ha | 200,0 g/ha | 70,0% | 10,0 % | + | 60,0% | 60,0 % | |
| 50,0 g/ha | 200,0 g/ha | 80,0% | 73,0 % | + | 70,0% | 80,0 % | |
| 100,0 g/ha | 200,0 g/ha | 90,0% | 100,0 % | | 80,0% | 100,0 % | |
| 25,0 g/ha | 400,0 g/ha | 60,0% | 30,0 % | + | 98,0% | 68,0 % | + |
| 50,0 g/ha | 400,0 g/ha | 75,0% | 79,0 % | | 99,0% | 84,0 % | + |
| 100,0 g/ha | 400,0 g/ha | 80,0% | 100,0 % | | 100,0% | 100,0 % | |
| 25,0 g/ha | 800,0 g/ha | 85,0% | 65,0 % | + | 99,0% | 96,0 % | + |
| 50,0 g/ha | 800,0 g/ha | 100,0% | 89,5 % | + | 100,0% | 98,0 % | + |
| 100,0 g/ha | 800,0 g/ha | 100,0% | 100,0 % | | 100,0% | 100,0 % | |

Tabelle 12C

| Dosierung 1 (A) | Dosierung 2 Daimuron | SAGPY | | |
|---|---|---|---|---|
| | | Wirkung | nach Colby | Synergismus |
| 25,0 g/ha | | 40,0 % | | |
| 50,0 g/ha | | 80,0 % | | |
| 100,0 g/ha | | 90,0 % | | |
| | 200,0 g/ha | | | |
| | 400,0 g/ha | | | |
| | 800,0 g/ha | | | |
| 25,0 g/ha | 200,0 g/ha | 50,0 % | 40,0 % | + |
| 50,0 g/ha | 200,0 g/ha | 80,0 % | 80,0 % | |
| 100,0 g/ha | 200,0 g/ha | 95,0 % | 90,0 % | + |
| 25,0 g/ha | 400,0 g/ha | 55,0 % | 40,0 % | + |
| 50,0 g/ha | 400,0 g/ha | 85,0 % | 80,0 % | + |
| 100,0 g/ha | 400,0 g/ha | 95,0 % | 90,0 % | + |
| 25,0 g/ha | 800,0 g/ha | 60,0 % | 40,0 % | + |
| 50,0 g/ha | 800,0 g/ha | 70,0 % | 80,0 % | |
| 100,0 g/ha | 800,0 g/ha | 95,0 % | 90,0 % | + |

Beispiel 13

Mischungen von (A) mit Thiobencarb (B13)

Für den Versuch wurde Thiobencarb in den Aufwandmengen 250 / 500 / 1000 g/ha und (A) in den Aufwandmengen 25 / 50 / 100 g/ha eingesetzt.

Ein synergistischer Effekt wurde für einige Mischungsverhältnisse bei der europäischen Echinochloa crus-galli sowie bei SAGPY gefunden, wie die nachfolgende Tabelle 13 zeigt.

Tabelle 13

| Dosierung 1 (A) | Dosierung 2 Thiobencarb | ECHCG(europäisch) | | | SAGPY | | |
|---|---|---|---|---|---|---|---|
| | | Wirkung | n. Colby | Synergismus | Wirkung | n. Colby | Synergismus |
| 25,0 g/ha | | 85,0% | | | 10,0 % | | |
| 50,0 g/ha | | 98,0% | | | 85,0 % | | |
| 100,0 g/ha | | 100,0% | | | 95,0 % | | |
| | 250,0 g/ha | 65,0% | | | | | |
| | 500,0 g/ha | 90,0% | | | | | |
| | 1000,0 g/ha | 100,0% | | | | | |
| 25,0 g/ha | 250,0 g/ha | 98,0% | 94,8% | + | 50,0 % | 10,0 % | + |
| 50,0 g/ha | 250,0 g/ha | 99,0% | 99,3% | | 60,0 % | 85,0 % | |
| 100,0 g/ha | 250,0 g/ha | 100,0% | 100,0% | | 70,0 % | 95,0 % | |
| 25,0 g/ha | 500,0 g/ha | 98,0% | 98,5% | | 50,0 % | 10,0 % | + |
| 50,0 g/ha | 500,0 g/ha | 100,0% | 99,8% | + | 70,0 % | 85,0 % | |
| 100,0 g/ha | 500,0 g/ha | 100,0% | 100,0% | | 82,0 % | 95,0 % | |
| 25,0 g/ha | 1000,0 g/ha | 100,0% | 100,0% | | 55,0 % | 10,0 % | + |
| 50,0 g/ha | 1000,0 g/ha | 100,0% | 100,0% | | 75,0 % | 85,0 % | |
| 100,0 g/ha | 1000,0 g/ha | 100,0% | 100,0% | | 85,0 % | 95,0 % | |

Beispiel 14

Mischungen von (A) mit Butachlor (B14)

Für den Versuch wurde Butachlor in den Aufwandmengen 250 / 500 / 1000 g/ha und (A) in den Aufwandmengen 25 / 50 / 100 g/ha eingesetzt.

Ein synergistischer Effekt wurde für die meisten Mischungsverhältnisse bei SAGPY gefunden, wie aus der nachfolgenden Tabelle 14 hervorgeht.

Tabelle 14

| Dosierung 1 (A) | Dosierung 2 Butachlor | SAGPY | | |
|---|---|---|---|---|
| | | Wirkung | nach Colby | Synergismus |
| 25,0 g/ha | | 50,0 % | | |
| 50,0 g/ha | | 70,0 % | | |
| 100,0 g/ha | | 90,0 % | | |
| | 250,0 g/ha | 20,0 % | | |
| | 500,0 g/ha | 30,0 % | | |
| | 1000,0 g/ha | 35,0 % | | |
| 25,0 g/ha | 250,0 g/ha | 80,0 % | 60,0 % | + |
| 50,0 g/ha | 250,0 g/ha | 90,0 % | 76,0 % | + |
| 100,0 g/ha | 250,0 g/ha | 100,0 % | 92,0 % | + |
| 25,0 g/ha | 500,0 g/ha | 40,0 % | 65,0 % | |
| 50,0 g/ha | 500,0 g/ha | 90,0 % | 79,0 % | + |
| 100,0 g/ha | 500,0 g/ha | 94,0 % | 93,0 % | + |
| 25,0 g/ha | 1000,0 g/ha | 60,0 % | 67,5 % | |
| 50,0 g/ha | 1000,0 g/ha | 90,0 % | 80,5 % | + |
| 100,0 g/ha | 1000,0 g/ha | 95,0 % | 93,5 % | + |

Beispiel 15

Mischungen von (A) mit Pretilachlor (B15)

Für den Versuch wurde Pretilachlor in den Aufwandmengen 200 / 400 / 600 g/ha und (A) in den Aufwandmengen 25 / 50 / 100 g/ha eingesetzt.

Ein synergistischer Effekt wurde für einige Mischungsverhältnisse an SCPJU und CYPDI beobachtet, wie die nachfolgende Tabelle 15 zeigt.

Tabelle 15

| Dosierung 1 (A) | Dosierung 2 Pretilachlor | SCPJU | | | CYPDI | | |
|---|---|---|---|---|---|---|---|
| | | Wirkung | n. Colby | Synergismus | Wirkung | n. Colby | Synergismus |
| 25,0 g/ha | | 85,0% | | | 60,0% | | |
| 50,0 g/ha | | 90,0% | | | 80,0% | | |
| 100,0 g/ha | | 95,0% | | | 95,0% | | |
| | 200,0 g/ha | 80,0% | | | 90,0% | | |
| | 400,0 g/ha | 80,0% | | | 90,0% | | |
| | 600,0 g/ha | 80,0% | | | 95,0% | | |
| 25,0 g/ha | 200,0 g/ha | 98,0% | 97,0 % | + | 95,0% | 96,0 % | |
| 50,0 g/ha | 200,0 g/ha | 98,0% | 98,0 % | | 100,0% | 98,0 % | + |
| 100,0 g/ha | 200,0 g/ha | 99,0% | 99,0 % | | 100,0% | 99,5 % | + |
| 25,0 g/ha | 400,0 g/ha | 100,0% | 97,0 % | + | 100,0% | 96,0 % | + |
| 50,0 g/ha | 400,0 g/ha | 100,0% | 98,0 % | + | 100,0% | 98,0 % | + |
| 100,0 g/ha | 400,0 g/ha | 98,0% | 99,0 % | | 98,0% | 99,5 % | |
| 25,0 g/ha | 600,0 g/ha | 98,0% | 97,0 % | + | 95,0% | 98,0 % | |
| 50,0 g/ha | 600,0 g/ha | 99,0% | 98,0 % | + | 98,0% | 99,0 % | |
| 100,0 g/ha | 600,0 g/ha | 98,0% | 99,0 % | | 99,0% | 99,8 % | |

Beispiel 16

Mischungen von (A) mit Dimepiperate

Für den Versuch wurde Dimepiperate in den Aufwandmengen 250 / 500 / 1000 g/ha und (A) in den Aufwandmengen 25 / 50 / 100 g/ha eingesetzt.

Ein synergistischer Effekt wurde für einige Mischungsverhältnisse an SAGPY und CYPDI gefunden, wie aus der nachfolgenden Tabelle 16 hervorgeht.

Tabelle 16

| Dosierung 1 (A) | Dosierung 2 Dimepiperate | CYPDI | | | SAGPY | | |
|---|---|---|---|---|---|---|---|
| | | Wirkung | n. Colby | Synergismus | Wirkung | n. Colby | Synergismus |
| 25,0 g/ha | | 70,0% | | | 0,0 % | | |
| 50,0 g/ha | | 80,0% | | | 50,0 % | | |
| 100,0 g/ha | | 90,0% | | | 80,0 % | | |
| | 250,0 g/ha | 0,0% | | | | | |

Tabelle 16   (fortgesetzt)

| Dosierung 1 (A) | Dosierung 2 Dimepiperate | CYPDI | | | SAGPY | | |
|---|---|---|---|---|---|---|---|
| | | Wirkung | n. Colby | Synergismus | Wirkung | n. Colby | Synergismus |
| | 500,0 g/ha | 30,0% | | | | | |
| | 1000,0 g/ha | 60,0% | | | | | |
| 25,0 g/ha | 250,0 g/ha | 100,0% | 70,0 % | + | 20,0 % | 0,0 % | + |
| 50,0 g/ha | 250,0 g/ha | 100,0% | 80,0 % | + | 50,0 % | 50,0 % | |
| 100,0 g/ha | 250,0 g/ha | 100,0% | 90,0 % | + | 75,0 % | 80,0 % | |
| 25,0 g/ha | 500,0 g/ha | 100,0% | 79,0 % | + | 20,0 % | 0,0 % | + |
| 50,0 g/ha | 500,0 g/ha | 100,0% | 86,0 % | + | 50,0 % | 50,0 % | |
| 100,0 g/ha | 500,0 g/ha | 100,0% | 93,0 % | + | 75,0 % | 80,0 % | |
| 25,0 g/ha | 1000,0 g/ha | 100,0% | 88,0 % | + | 25,0 % | 0,0% | + |
| 50,0 g/ha | 1000,0 g/ha | 100,0% | 92,0 % | + | 70,0 % | 50,0 % | + |
| 100,0 g/ha | 1000,0 g/ha | 100,0% | 96,0 % | + | 90,0 % | 80,0 % | + |

Beispiel 17

Mischungen von (A) mit Fenoxaprop Ethyl (B17)

Für den Versuch wurde Fenoxaprop Ethyl in den Aufwandmengen 5 / 10 / 20 g/ha und (A) in den Aufwandmengen 25 / 50 / 100 g/ha eingesetzt.
Ein synergistischer Effekt wurde für einige Mischungsverhältnisse an ECHCG(US) und CYPDI gefunden, wie aus der nachfolgenden Tabelle 17 hervorgeht.

Tabelle 17

| Dosierung 1 (A) | Dosierung 2 Fenoxaprop Ethyl | ECHCG(amerikanisch) | | | CYPDI | | |
|---|---|---|---|---|---|---|---|
| | | Wirkung | n. Colby | Synergismus | Wirkung | n. Colby | Synergismus |
| 25,0 g/ha | | 98,0% | | | 90,0% | | |
| 50,0 g/ha | | 99,0% | | | 92,0% | | |
| 100,0 g/ha | | 100,0% | | | 95,0% | | |
| | 5,0 g/ha | 10,0% | | | 0,0% | | |
| | 10,0 g/ha | 20,0% | | | 0,0% | | |
| | 20,0 g/ha | 0,0% | | | 80,0% | | |
| 25,0 g/ha | 5,0 g/ha | 25,0% | 98,2% | | 80,0% | 90,0 % | |
| 50,0 g/ha | 5,0 g/ha | 100,0% | 99,1% | + | 90,0% | 92,0 % | |
| 100,0 g/ha | 5,0 g/ha | 100,0% | 100,0% | | 100,0% | 95,0 % | + |
| 25,0 g/ha | 10,0 g/ha | 25,0% | 98,4% | | 95,0% | 90,0 % | + |

Tabelle 17   (fortgesetzt)

| Dosierung 1 (A) | Dosierung 2 Fenoxaprop Ethyl | ECHCG(amerikanisch) | | | CYPDI | | |
|---|---|---|---|---|---|---|---|
| | | Wirkung | n. Colby | Synergismus | Wirkung | n. Colby | Synergismus |
| 50,0 g/ha | 10,0 g/ha | 98,0% | 99,2% | | 100,0% | 92,0 % | + |
| 100,0 g/ha | 10,0 g/ha | 100,0% | 100,0% | | 100,0% | 95,0 % | + |
| 25,0 g/ha | 20,0 g/ha | 10,0% | 98,0% | | 40,0% | 98,0 % | |
| 50,0 g/ha | 20,0 g/ha | 100,0% | 99,0% | + | 100,0% | 98,4 % | + |
| 100,0 g/ha | 20,0 g/ha | 100,0% | 100,0% | | 100,0% | 99,0 % | + |

Beispiel 18

Mischung von (A) mit Clomeprop (B18)

Für den Versuch wurde Clomeprop in den Aufwandmengen 200 / 400 / 800 g/ha und (A) in den Aufwandmengen 25 / 50 / 100 g/ha eingesetzt.

Ein synergistischer Effekt wurde für einige Mischungsverhältnisse an CYPDI gefunden, wie aus der nachfolgenden Tabelle 18 hervorgeht.

Tabelle 18

| Dosierung 1 (A) | Dosierung 2 Clomeprop | CYPDI Wirkung | n. Colby | Synergismus |
|---|---|---|---|---|
| 25,0 g/ha | | 70,0 % | | |
| 50,0 g/ha | | 75,0 % | | |
| 100,0 g/ha | | 90,0 % | | |
| 25,0 g/ha | 200,0 g/ha | 95,0 % | | |
| 50,0 g/ha | 400,0 g/ha | 100,0 % | | |
| 100,0 g/ha | 800, g/ha | 100,0 % | | |
| 25,0 g/ha | 200,0 g/ha | 100,0 % | 98,5 % | + |
| 50,0 g/ha | 200,0 g/ha | 100,0 % | 98,8 % | + |
| 100,0 g/ha | 200,0 g/ha | 100,0 % | 99,5 % | + |
| 25,0 g/ha | 400,0 g/ha | 100,0 % | 100,0 % | |
| 50,0 g/ha | 400,0 g/ha | 100,0 % | 100,0 % | |
| 100,0 g/ha | 400,0 g/ha | 100,0 % | 100,0 % | |
| 25,0 g/ha | 800,0 g/ha | 100,0 % | 100,0 % | |
| 50,0 g/ha | 800,0 g/ha | 100,0 % | 100,0 % | |
| 100,0 g/ha | 800,0 g/ha | 100,0 % | 100,0 % | |

Beispiel 19

Mischungen von (A) mit Cinmethylin (B19)

Für den Versuch wurde Cinmethylin in den Aufwandmengen 10 / 20 / 40 g/ha und (A) in den Aufwandmengen 25 / 50 / 100 g/ha eingesetzt.

Ein synergistischer Effekt wurde für einige Mischungsverhältnisse an ECHCG(europäisch) und CYPDI gefunden, wie aus der nachfolgenden Tabelle 19 hervorgeht.

Tabelle 19

| Dosierung 1 (A) | Dosierung 2 Cinmethylin | ECHCG(europäisch) | | | CYPDI | | |
|---|---|---|---|---|---|---|---|
| | | Wirkung | n. Colby | Synergismus | Wirkung | n. Colby | Synergismus |
| 25,0 g/ha | | 95,0% | | | 30,0% | | |
| 50,0 g/ha | | 99,0% | | | 80,0% | | |
| 100,0 g/ha | | 100,0% | | | 90,0% | | |
| | 10,0 g/ha | 60,0% | | | 60,0% | | |
| | 20,0 g/ha | 100,0% | | | 60,0% | | |
| | 40,0 g/ha | 100,0% | | | 60,0% | | |
| 25,0 g/ha | 10,0 g/ha | 99,0% | 98,0% | + | 30,0% | 72,0 % | |
| 50,0 g/ha | 10,0 g/ha | 100,0% | 99,6% | + | 98,0% | 92,0 % | + |
| 100,0 g/ha | 10,0 g/ha | 100,0% | 100,0% | | 98,0% | 96,0 % | + |
| 25,0 g/ha | 20,0 g/ha | 100,0% | 100,0% | | 90,0% | 72,0 % | + |
| 50,0 g/ha | 20,0 g/ha | 100,0% | 100,0% | | 100,0% | 92,0 % | + |
| 100,0 g/ha | 20,0 g/ha | 100,0% | 100,0% | | 100,0% | 96,0 % | + |
| 25,0 g/ha | 40,0 g/ha | 100,0% | 100,0% | | 100,0% | 72,0 % | + |
| 50,0 g/ha | 40,0 g/ha | 100,0% | 100,0% | | 100,0% | 92,0 % | + |
| 100,0 g/ha | 40,0 g/ha | 100,0% | 100,0% | | 100,0% | 96,0 % | + |

Beispiel 20

Mischungen von (A) mit Bromobutide (B20)

Für den Versuch wurde Bromobutide in den Aufwandmengen 100 / 200 / 400 g/ha und (A) in den Aufwandmengen 25 / 50 / 100 g/ha eingesetzt.

Ein synergistischer Effekt wurde für einige Mischungsverhältnisse an ECHCG(europäisch) und ECHCG(amerikanisch) gefunden, wie aus der nachfolgenden Tabelle 20 hervorgeht.

Tabelle 20

| Dosierung 1 (A) | Dosierung 2 Bromobutide | ECHCG(europäisch) | | | ECHCG(amerikanisch) | | |
|---|---|---|---|---|---|---|---|
| | | Wirkung | n. Colby | Synergismus | Wirkung | n. Colby | Synergismus |
| 25,0 g/ha | | 50,0% | | | 65,0% | | |
| 50,0 g/ha | | 98,0% | | | 99,0% | | |
| 100,0 g/ha | | 100,0% | | | 100,0% | | |
| | 200,0 g/ha | 10,0% | | | 5,0% | | |
| | 400,0 g/ha | 25,0% | | | 10,0% | | |
| | 800,0 g/ha | 30,0% | | | 40,0% | | |
| 25,0 g/ha | 200,0 g/ha | 90,0% | 55,0% | + | 80,0% | 66,8% | + |
| 50,0 g/ha | 200,0 g/ha | 100,0% | 98,2% | + | 100,0% | 99,1% | + |

18

Tabelle 20   (fortgesetzt)

| Dosierung 1 (A) | Dosierung 2 Bromobutide | ECHCG(europäisch) | | | ECHCG(amerikanisch) | | |
|---|---|---|---|---|---|---|---|
| | | Wirkung | n. Colby | Synergismus | Wirkung | n. Colby | Synergismus |
| 100,0 g/ha | 200,0 g/ha | 100,0% | 100,0% | | 100,0% | 100,0% | |
| 25,0 g/ha | 400,0 g/ha | 95,0% | 62,5% | + | 98,0% | 68,5% | + |
| 50,0 g/ha | 400,0 g/ha | 100,0% | 98,5% | + | 100,0% | 99,1% | + |
| 100,0 g/ha | 400,0 g/ha | 100,0% | 100,0% | | 100,0% | 100,0% | |
| 25,0 g/ha | 800,0 g/ha | 100,0% | 65,0% | + | 100,0% | 79,0% | + |
| 50,0 g/ha | 800,0 g/ha | 100,0% | 98,6% | + | 100,0% | 99,4% | + |
| 100,0 g/ha | 800.0 g/ha | 100,0% | 100,0% | | 100,0% | 100,0% | |

Beispiel 21

Mischungen von (A) mit Quinclorac (B21)

Für den Versuch wurde Quinclorac in den Aufwandmengen 250 / 500 / 1000 g/ha und (A) in den Aufwandmengen 25 / 50 / 100 g/ha eingesetzt.

Ein synergistischer Effekt wurde für einige Mischungsverhältnisse an CYPSE und SCPJU gefunden, wie aus der nachfolgenden Tabelle 21 hervorgeht.

Tabelle 21

| Dosierung 1 (A) | Dosierung 2 Quinclorac | CYPSE | | | SCPJU | | |
|---|---|---|---|---|---|---|---|
| | | Wirkung | n. Colby | Synergismus | Wirkung | n. Colby | Synergismus |
| 25,0 g/ha | | 0,0% | | | 98,0% | | |
| 50,0 g/ha | | 10,0% | | | 100,0% | | |
| 100,0 g/ha | | 95,0% | | | 100,0% | | |
| | 250,0 g/ha | 0,0% | | | 0,0% | | |
| | 500,0 g/ha | 0,0% | | | 10,0% | | |
| | 1000,0 g/ha | 0,0% | | | 50,0% | | |
| 25,0 g/ha | 250,0 g/ha | 0,0% | | | 99,0% | 98,0 % | + |
| 50,0 g/ha | 250,0 g/ha | 50,0% | 10,0 % | + | 100,0% | 100,0 % | |
| 100,0 g/ha | 250,0 g/ha | 95,0% | 95,0 % | | 100,0% | 100,0 % | |
| 25,0 g/ha | 500,0 g/ha | 0,0% | 0,0 % | | 100,0% | 98,2 % | + |
| 50,0 g/ha | 500,0 g/ha | 50,0% | 10,0 % | + | 100,0% | 100,0% | |
| 100,0 g/ha | 500,0 g/ha | 100,0% | 95,0 % | + | 100,0% | 100,0 % | |
| 25,0 g/ha | 1000,0 g/ha | 10,0% | 0,0 % | + | 100,0% | 99,0 % | + |

Tabelle 21   (fortgesetzt)

| Dosierung 1 (A) | Dosierung 2 Quinclorac | CYPSE | | | SCPJU | | |
|---|---|---|---|---|---|---|---|
| | | Wirkung | n. Colby | Synergismus | Wirkung | n. Colby | Synergismus |
| 50,0 g/ha | 1000,0 g/ha | 50,0% | 10,0 % | + | 100,0% | 100,0 % | |
| 100,0 g/ha | 1000,0 g/ha | 100,0% | 95,0 % | + | 100,0% | 100,0 % | |

Beispiel 22

Mischungen von (A) mit Mefenacet (B22)

Für den Versuch wurde Mefenacet in den Aufwandmengen 250 / 500 / 1000 g/ha und (A) in den Aufwandmengen 25 / 50 / 100 g/ha eingesetzt.

Ein synergistischer Effekt wurde für einige Mischungsverhältnisse an SAGPY gefunden, wie aus der nachfolgenden Tabelle 22 hervorgeht.

Tabelle 22

| Dosierung 1 (A) | Dosierung 2 Mefenacet | SAGPY | | |
|---|---|---|---|---|
| | | Wirkung | n. Colby | Synergismus |
| 25,0 g/ha | | | | |
| 50,0 g/ha | | 30,0 % | | |
| 100,0 g/ha | | 40,0 % | | |
| | 250,0 g/ha | 0,0 % | | |
| | 500,0 g/ha | 20,0 % | | |
| | 1000,0 g/ha | 40,0 % | | |
| 25,0 g/ha | 250,0 g/ha | 30,0 % | 0,0 % | + |
| 50,0 g/ha | 250,0 g/ha | 50,0 % | 30,0 % | + |
| 100,0 g/ha | 250,0 g/ha | 80,0 % | 40,0 % | + |
| 25,0 g/ha | 500,0 g/ha | 30,0 % | 20,0 % | + |
| 50,0 g/ha | 500,0 g/ha | 50,0 % | 44,0 % | + |
| 100,0 g/ha | 500,0 g/ha | 80,0 % | 52,0 % | + |
| 25,0 g/ha | 1000,0 g/ha | 30,0 % | 40,0 % | |
| 50,0 g/ha | 1000,0 g/ha | 75,0 % | 58,0 % | + |
| 100,0 g/ha | 1000,0 g/ha | 90,0 % | 64,0 % | + |

Beispiel 23

Mischungen von (A) mit Pyrazosulfuron-ethyl (B23)

Für den Versuch wurde Pyrazosulfuron-ethyl in den Aufwandmengen 10 / 40 g/ha und (A) in den Aufwandmengen 25 / 50 / 100 g/ha eingesetzt.

Ein synergistischer Effekt wurde für einige Mischungsverhältnisse an CYPDI gefunden, wie aus der nachfolgenden Tabelle 23 hervorgeht.

Tabelle 23

| Dosierung 1 (A) | Dosierung 2 Pyrazosulfuron-ethyl | CYPDI | | |
|---|---|---|---|---|
| | | Wirkung | n. Colby | Synergismus |
| 25,0 g/ha | | 90,0 % | | |
| 50,0 g/ha | | 90,0 % | | |
| 100,0 g/ha | | 70,0 % | | |

Tabelle 23  (fortgesetzt)

| Dosierung 1 (A) | Dosierung 2 Pyrazosulfuron-ethyl | CYPDI | | |
| --- | --- | --- | --- | --- |
| | | Wirkung | n. Colby | Synergismus |
| | 10,0 g/ha<br>40,0 g/ha | 95,0 %<br>70,0 % | | |
| 25,0 g/ha<br>50,0 g/ha<br>100,0 g/ha | 10,0 g/ha<br>10,0 g/ha<br>10,0 g/ha | 95,0 %<br>90,0 %<br>100,0 % | 99,5 %<br>99,5 %<br>98,5 % | <br><br>+ |
| 25,0 g/ha<br>50,0 g/ha<br>100,0 g/ha | 40,0 g/ha<br>40,0 g/ha<br>40,0 g/ha | 75,0 %<br>100,0 %<br>100,0 % | 97,0 %<br>97,0 %<br>91,0 % | <br>+<br>+ |

Beispiel 24

Mischungen von (A) mit Esprocarb (B24)

Für den Versuch wurde Esprocarb in den Aufwandmengen 200 / 400 / 800 g/ha und (A) in den Aufwandmengen 25 / 50 / 100 g/ha eingesetzt.

Ein synergistischer Effekt wurde für einige Mischungsverhältnisse an ECHCG(europäisch) und SCPJU gefunden, wie aus der nachfolgenden Tabelle 24 hervorgeht.

Tabelle 24

| Dosierung 1 (A) | Dosierung 2 Esprocarb | ECHCH(europäisch) | | | SCPJU | | |
| --- | --- | --- | --- | --- | --- | --- | --- |
| | | Wirkung | n. Colby | Synergismus | Wirkung | n. Colby | Synergismus |
| 25,0 g/ha<br>50,0 g/ha<br>100,0 g/ha | | 95,0%<br>99,0%<br>100,0% | | | 95,0%<br>97,0%<br>99,0% | | |
| | 200,0 g/ha<br>400,0 g/ha<br>800,0 g/ha | 20,0%<br>80,0%<br>80,0% | | | 45,0%<br>80,0%<br>85,0% | | |
| 25,0 g/ha<br>50,0 g/ha<br>100,0 g/ha | 200,0 g/ha<br>200,0 g/ha<br>200,0 g/ha | 99,0%<br>100,0%<br>100,0% | 96,0%<br>99,2%<br>100,0% | +<br>+<br> | 100,0%<br>100,0%<br>100,0% | 97,3 %<br>98,4 %<br>99,5 % | +<br>+<br>+ |
| 25,0 g/ha<br>50,0 g/ha<br>100,0 g/ha | 400,0 g/ha<br>400,0 g/ha<br>400,0 g/ha | 92,0%<br>100,0%<br>100,0% | 99,0%<br>99,8%<br>100,0% | <br>+<br> | 99,0%<br>99,0%<br>100,0% | 99,0 %<br>99,4 %<br>99,8 % | <br><br>+ |

Tabelle 24   (fortgesetzt)

| Dosierung 1 (A) | Dosierung 2 Esprocarb | ECHCH(europäisch) | | | SCPJU | | |
|---|---|---|---|---|---|---|---|
| | | Wirkung | n. Colby | Synergismus | Wirkung | n. Colby | Synergismus |
| 25,0 g/ha | 800,0 g/ha | 99,0% | 99,0% | | 99,0% | 99,3 % | |
| 50,0 g/ha | 800,0 g/ha | 100,0% | 99,8% | + | 99,0% | 99,6 % | |
| 100,0 g/ha | 800,0 g/ha | 100,0% | 100,0% | | 100,0% | 99,9 % | + |

Beispiel 25

Mischungen von (A) mit Cinosulfuron (B25)

Für den Versuch wurde Cinosulfuron in den Aufwandmengen 25 / 75 g/ha und (A) in den Aufwandmengen 25 / 50 / 100 g/ha eingesetzt.

Ein synergistischer Effekt wurde für einige Mischungsverhältnisse an CYPSE gefunden, wie aus der nachfolgenden Tabelle 25 zu ersehen ist.

Tabelle 25

| Dosierung 1 (A) | Dosierung 2 Cinosulfuron | CYPSE | | |
|---|---|---|---|---|
| | | Wirkung | n. Colby | Synergismus |
| 25,0 g/ha | | 0,0 % | | |
| 50,0 g/ha | | 10,0 % | | |
| 100,0 g/ha | | 20,0 % | | |
| | 25,0 g/ha | 0,0 % | | |
| | 75,0 g/ha | 45,0 % | | |
| 25,0 g/ha | 25,0 g/ha | 0,0 % | 0,0 % | |
| 50,0 g/ha | 25,0 g/ha | 20,0 % | 10,0 % | + |
| 100,0 g/ha | 25,0 g/ha | 20,0 % | 20,0 % | |
| 25,0 g/ha | 75,0 g/ha | 60,0 % | 45,0 % | + |
| 50,0 g/ha | 75,0 g/ha | 70,0 % | 50,5 % | + |
| 100,0 g/ha | 75,0 g/ha | 85,0 % | 56,0 % | + |

Beispiel 26

Mischungen von (A) mit Thenylchlor (B26)

Für den Versuch wurde Thenylchlor in den Aufwandmengen 25 / 50 / 75 g/ha und (A) in den Aufwandmengen 25 / 50 / 100 g/ha eingesetzt.

Ein synergistischer Effekt wurde für einige Mischungsverhältnisse an ECHCG(europäisch), CYPSE und SAGPY gefunden, wie aus den nachfolgenden Tabellen 26A und 26B zu ersehen ist.

Tabelle 26A

| Dosierung 1 (A) | Dosierung 2 Thenylchlor | ECHCG(europäisch) | | |
|---|---|---|---|---|
| | | Wirkung | n. Colby | Synergismus |
| 25,0 g/ha | | 55,0 % | | |
| 50,0 g/ha | | 97,0 % | | |
| 100,0 g/ha | | 99,0 % | | |
| | 25,0 g/ha | 10,0 % | | |
| | 50,0 g/ha | 96,0 % | | |
| | 75,0 g/ha | 98,0 % | | |

Tabelle 26A   (fortgesetzt)

| Dosierung 1 (A) | Dosierung 2 Thenylchlor | ECHCG(europäisch) | | |
|---|---|---|---|---|
| | | Wirkung | n. Colby | Synergismus |
| 25,0 g/ha | 25,0 g/ha | 80,0 % | 59,5 % | + |
| 50,0 g/ha | 25,0 g/ha | 98,0 % | 97,3 % | + |
| 100,0 g/ha | 25,0 g/ha | 99,0 % | 99,1 % | |
| 25,0 g/ha | 50,0 g/ha | 100,0 % | 98,2 % | + |
| 50,0 g/ha | 50,0 g/ha | 100,0 % | 99,9 % | + |
| 100,0 g/ha | 50,0 g/ha | 100,0 % | 100,0 % | + |
| 25,0 g/ha | 75,0 g/ha | 100,0 % | 99,1 % | + |
| 50,0 g/ha | 75,0 g/ha | 100,0 % | 99,9 % | + |
| 100,0 g/ha | 75,0 g/ha | 100,0 % | 100,0 % | + |

Tabelle 26B

| Dosierung 1 (A) | Dosierung 2 Thenylchlor | CYPSE | | | SAGPY | | |
|---|---|---|---|---|---|---|---|
| | | Wirkung | n. Colby | Synergismus | Wirkung | n. Colby | Synergismus |
| 25,0 g/ha | | 0,0 % | | | 55,0 % | | |
| 50,0 g/ha | | 10,0 % | | | 70,0 % | | |
| 100,0 g/ha | | 95,0 % | | | 85,0 % | | |
| | 25,0 g/ha | 10,0 % | | | 0,0 % | | |
| | 50,0 g/ha | 30,0 % | | | 0,0 % | | |
| | 75,0 g/ha | 80,0 % | | | 10,0 % | | |
| 25,0 g/ha | 25,0 g/ha | 0,0 % | 10,0 % | | 50,0 % | 55,0 % | |
| 50,0 g/ha | 25,0 g/ha | 90,0 % | 19,0 % | + | 70,0 % | 70,0 % | |
| 100,0 g/ha | 25,0 g/ha | 95,0 % | 95,5 % | | 90,0 % | 85,0 % | + |
| 25,0 g/ha | 50,0 g/ha | 0,0 % | 30,0 % | | 70,0 % | 55,0 % | + |
| 50,0 g/ha | 50,0 g/ha | 0,0 % | 37,0 % | | 80,0 % | 70,0 % | + |
| 100,0 g/ha | 50,0 g/ha | 0,0 % | 96,5 % | | 90,0 % | 85,0 % | + |
| 25,0 g/ha | 75,0 g/ha | 95,0 % | 80,0 % | + | 30,0 % | 59,5 % | |
| 50,0 g/ha | 75,0 g/ha | 97,0 % | 82,0 % | + | 90,0 % | 73,0 % | + |
| 100,0 g/ha | 75,0 g/ha | 98,0 % | 99,0 % | | 90,0 % | 86,5 % | + |

Beispiel 27

Mischungen von (A) mit Cumyluron (B27)

Für den Versuch wurde Cumyluron in den Aufwandmengen 25 / 50 / 75 g/ha und (A) in den Aufwandmengen 25 / 50 / 100 g/ha eingesetzt.

Ein synergistischer Effekt wurde für einige Mischungsverhältnisse an ECHCG(europäisch) und ECHCG(amerikanisch) gefunden, wie aus der nachfolgenden Tabelle 27 zu ersehen ist.

Tabelle 27

| Dosierung 1 (A) | Dosierung 2 Cumyluron | ECHCG(europäisch) | | | ECHCG(amerikanisch) | | |
|---|---|---|---|---|---|---|---|
| | | Wirkung | n. Colby | Synergismus | Wirkung | n. Colby | Synergismus |
| 25,0 g/ha | | 90,0% | | | 93,0% | | |

Tabelle 27   (fortgesetzt)

| Dosierung 1 (A) | Dosierung 2 Cumyluron | ECHCG(europäisch) | | | ECHCG(amerikanisch) | | |
|---|---|---|---|---|---|---|---|
| | | Wirkung | n. Colby | Synergismus | Wirkung | n. Colby | Synergismus |
| 50,0 g/ha | | 100,0% | | | 100,0% | | |
| 100,0 g/ha | | 100,0% | | | 100,0% | | |
| | 25,0 g/ha | 0,0% | | | 0,0% | | |
| | 50,0 g/ha | 20,0% | | | 10,0% | | |
| | 75,0 g/ha | 30,0% | | | 20,0% | | |
| 25,0 g/ha | 25,0 g/ha | 95,0% | 90,0% | + | 95,0% | 93,0% | + |
| 50,0 g/ha | 25,0 g/ha | 100,0% | 100,0% | | 100,0% | 100,0% | |
| 100,0 g/ha | 25,0 g/ha | 100,0% | 100,0% | | 100,0% | 100,0% | |
| 25,0 g/ha | 50,0 g/ha | 95,0% | 92,0% | + | 95,0% | 93,7% | + |
| 50,0 g/ha | 50,0 g/ha | 100,0% | 100,0% | | 100,0% | 100,0% | |
| 100,0 g/ha | 50,0 g/ha | 100,0% | 100,0% | | 100,0% | 100,0% | |
| 25,0 g/ha | 75,0 g/ha | 70,0% | 93,0% | | 95,0% | 94,4% | + |
| 50,0 g/ha | 75,0 g/ha | 100,0% | 100,0% | | 100,0% | 100,0% | |
| 100,0 g/ha | 75,0 g/ha | 100,0% | 100,0% | | 100,0% | 100,0% | |

Beispiel 28

Mischungen von (A) mit MK 243 (B28)

Für den Versuch wurde MK243 in den Aufwandmengen 25 / 50 / 75 g/ha und (A) in den Aufwandmengen 25 / 50 / 100 g/ha eingesetzt.

MK 243 lag als WP20- Formulierung und (A) als WP5-Formulierung vor.

Ein synergistischer Effekt wurde bei einigen Mischungsverhältnissen bei CYPSE und CYDPI gefunden, wie aus der nachfolgenden Tabelle 28 zu ersehen ist.

Tabelle 28

| Dosierung 1 (A) | Dosierung 2 MK 243 | CYPSE | | | CYPDI | | |
|---|---|---|---|---|---|---|---|
| | | Wirkung | n. Colby | Synergismus | Wirkung | n. Colby | Synergismus |
| 25,0 g/ha | | 0,0% | | | 98,0% | | |
| 50,0 g/ha | | 40,0 % | | | 99,0% | | |
| 100,0 g/ha | | 100,0 % | | | 100,0% | | |
| | 25,0 g/ha | 0,0 % | | | 0,0% | | |
| | 50,0 g/ha | 0,0 % | | | 0,0% | | |
| | 75,0 g/ha | 10,0 % | | | 30,0% | | |
| 25,0 g/ha | 25,0 g/ha | 0,0 % | 0,0% | | 100,0% | 98,0% | + |
| 50,0 g/ha | 25,0 g/ha | 40,0 % | 40,0 % | | 100,0% | 99,0% | + |

Tabelle 28   (fortgesetzt)

| Dosierung 1 (A) | Dosierung 2 MK 243 | CYPSE | | | CYPDI | | |
|---|---|---|---|---|---|---|---|
| | | Wirkung | n. Colby | Synergismus | Wirkung | n. Colby | Synergismus |
| 100,0 g/ha | 25,0 g/ha | 90,0 % | 100,0 % | | 100,0% | 100,0% | |
| 25,0 g/ha | 50,0 g/ha | 30,0 % | 0,0% | + | 95,0% | 98,0% | |
| 50,0 g/ha | 50,0 g/ha | 50,0 % | 40,0 % | + | 98,0% | 99,0% | |
| 100,0 g/ha | 50,0 g/ha | 96,0 % | 100,0 % | | 100,0% | 100,0% | |
| 25,0 g/ha | 75,0 g/ha | 100,0 % | 10,0 % | + | 100,0% | 98,6% | + |
| 50,0 g/ha | 75,0 g/ha | 100,0 % | 46,0 % | + | 100,0% | 99,3% | + |

Beispiel 29

Mischungen von (A) mit Naproanilide (B29)

Für den Versuch wurde Naproanilide in den Aufwandmengen 500 / 625 / 750 g/ha und (A) in den Aufwandmengen 100 / 125 / 150 g/ha eingesetzt.

Ein synergistischer Effekt wurde bei einigen Mischungsverhältnissen bei CYPSE gefunden, wie aus der nachfolgenden Tabelle 29 zu ersehen ist.

Tabelle 29

| Dosierung 1 (A) | Dosierung 2 Naproanilide | CYPSE | | |
|---|---|---|---|---|
| | | Wirkung | n. Colby | Synergismus |
| 100,0 g/ha | | 95,0 % | | |
| 125,0 g/ha | | 85,0 % | | |
| 150,0 g/ha | | 80,0 % | | |
| | 500,0 g/ha | 0,0% | | |
| | 625,0 g/ha | 0,0% | | |
| | 750,0 g/ha | 0,0% | | |
| 100,0 g/ha | 500,0 g/ha | 88,0 % | 95,0 % | |
| 125,0 g/ha | 500,0 g/ha | 90,0 % | 85,0 % | + |
| 150,0 g/ha | 500,0 g/ha | 85,0 % | 80,0 % | + |
| 100,0 g/ha | 625,0 g/ha | 90,0 % | 95,0 % | |
| 125,0 g/ha | 625,0 g/ha | 90,0 % | 85,0 % | + |
| 150,0 g/ha | 625,0 g/ha | 70,0 % | 80,0 % | |
| 100,0 g/ha | 750,0 g/ha | 90,0 % | 95,0 % | |
| 125,0 g/ha | 750,0 g/ha | 95,0 % | 85,0 % | + |
| 150,0 g/ha | 750,0 g/ha | 70,0 % | 80,0 % | |

Beispiel 30

Mischungen von (A) mit Anilofos (B30)

Für den Versuch wurde Anilofos in den Aufwandmengen 62,5 / 93,8 / 125 g/ha und (A) in den Aufwandmengen 50 / 75 / 100 g/ha eingesetzt.

Ein synergistischer Effekt wurde bei allen untersuchten Mischungsverhältnissen bei CYPSE gefunden, wie aus der nachfolgenden Tabelle 30 zu ersehen ist.

Tabelle 30

| Dosierung 1 (A) | Dosierung 2 Anilofos | CYPSE | | |
|---|---|---|---|---|
| | | Wirkung | n. Colby | Synergismus |
| 50,0 g/ha<br>75,0 g/ha<br>100,0 g/ha | | 80,0 %<br>80,0 %<br>80,0 % | | |
| | 62,5 g/ha<br>93,8 g/ha<br>125,0 g/ha | 0,0%<br>0,0%<br>0,0% | | |
| 50,0 g/ha<br>75,0 g/ha<br>100,0 g/ha | 62,5 g/ha<br>62,5 g/ha<br>62,5 g/ha | 90,0 %<br>95,0 %<br>95,0 % | 80,0 %<br>80,0 %<br>80,0 % | +<br>+<br>+ |
| 50,0 g/ha<br>75,0 g/ha<br>100,0 g/ha | 93,8 g/ha<br>93,8 g/ha<br>93,8 g/ha | 90,0 %<br>85,0 %<br>95,0 % | 80,0 %<br>80,0 %<br>80,0 % | +<br>+<br>+ |
| 50,0 g/ha<br>75,0 g/ha<br>100,0 g/ha | 125,0 g/ha<br>125,0 g/ha<br>125,0 g/ha | 90,0 %<br>85,0 %<br>90,0 % | 80,0 %<br>80,0 %<br>80,0 % | +<br>+<br>+ |

Beispiel 31

Mischungen von (A) mit Benfuresate (B31)

Für den Versuch wurde Benfuresate in den Aufwandmengen 150 / 200 / 250 g/ha und (A) in den Aufwandmengen 50 / 75 / 100 g/ha eingesetzt.
Ein synergistischer Effekt wurde bei einigen Mischungsverhältnissen bei CYPDI gefunden, wie aus der nachfolgenden Tabelle 31 zu ersehen ist.

Tabelle 31

| Dosierung 1 (A) | Dosierung 2 Benfuresate | CYPDI | | |
|---|---|---|---|---|
| | | Wirkung | n. Colby | Synergismus |
| 50,0 g/ha<br>75,0 g/ha<br>100,0 g/ha | | 90,0 %<br>100,0 %<br>100,0 % | | |
| | 150,0 g/ha<br>200,0 g/ha<br>250,0 g/ha | 0,0%<br>0,0%<br>60,0 % | | |
| 50,0 g/ha<br>75,0 g/ha<br>100,0 g/ha | 150,0 g/ha<br>150,0 g/ha<br>150,0 g/ha | 100,0 %<br>100,0 %<br>100,0 % | 90,0 %<br>100,0 %<br>100,0 % | + |
| 50,0 g/ha<br>75,0 g/ha<br>100,0 g/ha | 200,0 g/ha<br>200,0 g/ha<br>200,0 g/ha | 100,0 %<br>100,0 %<br>100,0 % | 90,0 %<br>100,0 %<br>100,0 % | + |
| 50,0 g/ha<br>75,0 g/ha<br>100,0 g/ha | 250,0 g/ha<br>250,0 g/ha<br>250,0 g/ha | 100,0 %<br>100,0 %<br>100,0 % | 96,0 %<br>100,0 %<br>100,0 % | + |

Beispiel 32

Mischungen von (A) mit Piperophos (B32)

Für den Versuch wurde 1-(3-Chloro-4,5,67-tetrahydropyrazolo-[1,5-a]-pyridin-2-yl)-5-(methylpropargylamino)-4-pyrazolylcarbonitrile (A) in den Aufwandmengen von 25 und 100 g/ha und Piperophos in den Aufwandmengen von 400 and 800 g/ha eingesetzt.

Ein synergistischer Effekt wurde bei einigen Mischungsverhältnissen bei SCPJU gefunden, wie aus der nachfolgenden Tabelle 32 zu ersehen ist.

Tabelle 32

| Dosierung 1 (A) | Dosierung 2 Piperophos | SCPJU Wirkung (%) | Berechnet nach Colby | Synergismus |
|---|---|---|---|---|
| 25 | | 65 | | |
| 100 | | 95 | | |
| | 400 | 92 | | |
| | 800 | 94 | | |
| 25 | 800 | 99 | 98 | + |
| 100 | 800 | 100 | 99,7 | + |

Beispiel 33

Mischungen von (A) mit Pyributicarb (B33)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 25 und 50 g/ha und Pyributicarb in den Aufwandmengen von 200 and 400 g/ha eingesetzt.

Ein synergistischer Effekt wurde bei einigen Mischungsverhältnissen bei ECHCG gefunden, wie aus der nachfolgenden Tabelle 33 zu ersehen ist.

Tabelle 33

| Dosierung 1 (A) | Dosierung 2 Pyributicarb | ECHCG Wirkung (%) | Berechnet nach Colby | Synergismus |
|---|---|---|---|---|
| 25 | | 87 | | |
| 50 | | 99 | | |
| | 200 | 80 | | |
| | 400 | 99 | | |
| 25 | 200 | 98 | 97,4 | + |
| 25 | 400 | 100 | 99,9 | + |

Beispiel 34

Mischungen von (A) mit Ethoxysulfuron (B34)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 12.5 / 25 / 50 g/ha und Ethoxysulfuron in den Aufwandmengen von 5, 10 und 20 g/ha eingesetzt.

Ein synergistischer Effekt wurde bei einigen Mischungsverhältnissen bei ECHCG (2,5-Blattstadium) gefunden, wie aus der nachfolgenden Tabelle 34 zu ersehen ist.

Tabelle 34

| Dosierung 1 (A) | Dosierung 2 Ethoxysulforon | ECHCG Wirkung (%) | Berechnet nach Colby | Synergismus |
|---|---|---|---|---|
| 12,5 | | 30 | | |
| 25 | | 50 | | |
| 50 | | 75 | | |
| | 5 | 0 | | |
| | 10 | 10 | | |
| | 20 | 20 | | |
| 12,5 | 5 | 30 | 30 | - |
| 25 | 5 | 60 | 50 | + |
| 50 | 5 | 98 | 75 | + |
| 12,5 | 10 | 45 | 37 | + |
| 25 | 10 | 65 | 55 | + |
| 50 | 10 | 98 | 77,5 | + |
| 12,5 | 20 | 45 | 44 | + |
| 25 | 20 | 65 | 60 | + |
| 50 | 20 | 98 | 80 | + |

Beispiel 35

Mischungen von (A) mit Bensulfuronmethyl (B35)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 12.5 und 25 g/ha und Bensulfuronmethyl in den Aufwandmengen von 10 und 20 g/ha eingesetzt.

Ein synergistischer Effekt wurde bei ECHCG (2,5-Blattstadium) gefunden, wie aus der nachfolgenden Tabelle 35 zu ersehen ist.

Tabelle 35

| Dosierung 1 (A) | Dosierung 2 Bensulfuronmethyl | ECHCG Wirkung (%) | Berechnet nach Colby | Synergismus |
|---|---|---|---|---|
| 12,5 | | 20 | | |
| 25 | | 40 | | |
| | 10 | 40 | | |
| | 20 | 70 | | |
| 25 | 10 | 70 | 64 | + |

Beispiel 36

Mischungen von (A) mit Pyrazolate (B36)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 50 und 100 g/ha und Pyrazolate in den Aufwandmengen von 500 und 1000 g/ha eingesetzt.

Ein synergistischer Effekt wurde bei einigen Mischungsverhältnissen bei PASDS gefunden, wie aus der nachfolgenden Tabelle 36 zu ersehen ist.

Tabelle 36

| Dosierung 1 (A) | Dosierung 2 Pyrazolate | PASDS Wirkung (%) | Berechnet nach Colby | Synergismus |
|---|---|---|---|---|
| 50 | | 70 | | |
| 100 | | 80 | | |
| | 500 | 0 | | |
| | 1000 | 0 | | |
| 50 | 500 | 70 | 70 | - |
| 100 | 500 | 95 | 80 | + |
| 100 | 1000 | 100 | 80 | + |

Beispiel 37

Mischungen von (A) mit Pyrazoxyfen (B37)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 50 und 100 g/ha und Pyrazoxyfen in den Aufwandmengen von 500 und 1000 g/ha eingesetzt.

Ein synergistischer Effekt wurde bei einigen Mischungsverhältnissen bei PASDS gefunden, wie aus der nachfolgenden Tabelle 37 zu ersehen ist.

Tabelle 37

| Dosierung 1 (A) | Dosierung 2 Pyrazoxyfen | PASDS Wirkung (%) | Berechnet nach Colby | Synergismus |
|---|---|---|---|---|
| 50 | | 10 | | |
| 100 | | 98 | | |
| | 500 | 0 | | |
| | 1000 | 0 | | |
| 50 | 500 | 20 | 10 | + |
| 100 | 500 | 98 | 98 | - |
| 50 | 1000 | 30 | 10 | + |

Beispiel 38

Mischungen von (A) mit Benzofenap (B38)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in der Aufwandmenge von 50 g/ha und Benzofenap in den Aufwandmengen von 500 und 1000 g/ha eingesetzt.

Ein synergistischer Effekt wurde bei ECHCG gefunden, wie aus der nachfolgenden Tabelle 38 zu ersehen ist.

Tabelle 38

| Dosierung 1 (A) | Dosierung 2 Benzofenap | ECHCG Wirkung (%) | Berechnet nach Colby | Synergismus |
|---|---|---|---|---|
| 50 | | 80 | | |
| | 500 | 0 | | |
| | 1000 | 0 | | |
| 50 | 500 | 98 | 90 | + |

Beispiel 39

Mischungen von (A) mit Cyclosulfamuron (B39)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 6.25 und 12.5 g/ha und Cyclosulfamuron in den Aufwandmengen von 15 und 30 g/ha eingesetzt.

Ein synergistischer Effekt wurde bei einigen Mischungsverhältnissen bei SCPJU gefunden, wie aus der nachfolgenden Tabelle 39 zu ersehen ist.

Tabelle 39

| Dosierung 1 (A) | Dosierung 2 Cyclosufamuron | SCPJU Wirkung (%) | Berechnet nach Colby | Synergismus |
|---|---|---|---|---|
| 6,25 | | 30 | | |
| 12,5 | | 50 | | |
| | 15 | 60 | | |
| | 30 | 90 | | |
| 12,5 | 15 | 80 | 80 | - |
| 6,25 | 30 | 100 | 93 | + |
| 12,5 | 30 | 100 | 95 | + |

Beispiel 40

Mischungen von (A) mit Cyhalofop-butyl (B40)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 25 und 50 g/ha und Cyhalofop-butyl in den Aufwandmengen von 15 und 30 g/ha eingesetzt.

Ein synergistischer Effekt wurde bei einigen Mischungsverhältnissen bei ECHCG gefunden, wie aus der nachfolgenden Tabelle 40 zu ersehen ist.

Tabelle 40

| Dosierung 1 (A) | Dosierung 2 Pyributicarb | ECHCG Wirkung (%) | Berechnet nach Colby | Synergismus |
|---|---|---|---|---|
| 25 | | 30 | | |
| 50 | | 80 | | |
| | 15 | 50 | | |
| | 30 | 80 | | |
| 25 | 15 | 80 | 65 | + |
| 50 | 15 | 95 | 90 | + |
| 25 | 30 | 90 | 86 | + |
| 50 | 30 | 98 | 96 | + |

Beispiel 41

Mischungen von (A) mit NBA-061 (B41)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 25 und 50 g/ha und NBA-061 in den Aufwandmengen von 12.5 und 25 g/ha.

Ein synergistischer Effekt wurde bei einigen Mischungsverhältnissen bei ECHCG gefunden, wie aus der nachfolgenden Tabelle 41 zu ersehen ist.

Tabelle 41

| Dosierung 1 (A) | Dosierung 2 Pyributicarb | ECHCG Wirkung (%) | Berechnet nach Colby | Synergismus |
|---|---|---|---|---|
| 25 | | 30 | | |
| 50 | | 80 | | |
| | 12,5 | 50 | | |
| | 25 | 70 | | |
| 25 | 12,5 | 80 | 65 | + |
| 25 | 25 | 90 | 79 | + |
| 50 | 25 | 95 | 94 | + |

Beispiel 42

Mischungen von (A) mit Azimsulfuron (B42)

Für den Versuch wurde 1-(3-Chloro-4,5,6,7-tetrahydropyrazolo-[1,5-a]-pyridin-2-yl)-5-(methylpropargylamino)-4-pyrazolylcarbonitrile (A) in den Aufwandmengen von 30 und 60 g/ha und Azimsulfuron in den Aufwandmengen von 5 und 10 g/ha.

Ein synergistischer Effekt wurde bei einigen Mischungsverhältnissen bei CYPSE gefunden, wie aus der nachfolgenden Tabelle 42 zu ersehen ist.

Tabelle 42

| Dosierung 1 (A) | Dosierung 2 Pyributicarb | ECHCG Wirkung (%) | Berechnet nach Colby | Synergismus |
|---|---|---|---|---|
| 30 | | 50 | | |
| 60 | | 70 | | |
| | 5 | 70 | | |
| | 10 | 80 | | |
| 30 | 10 | 100 | 90 | + |
| 60 | 10 | 100 | 94 | + |

**Patentansprüche**

1. Herbizide Mittel mit synergistischer Wirkung, **dadurch gekennzeichnet, daß** sie als aktive Bestandteile eine Mischung aus 1-(3-Chlor-4,5,6,7-tetrahydropyrazolo-[1,5-a]-pyridin-2-yl)-5-(methyl-propargylamino)-4-pyrazolylcarbonsäurenitril [Komponente (A)] und einem Herbizid aus der Gruppe Bentazone, Molinate, Daimuron, Thiobencarb, Butachlor, Pretilachlor, Dimepiperate, Fenoxaprop-ethyl, Clomeprop, Cinmethylin, Bromobutide, Quinclorac, Mefenacet, Pyrazosulfuron-ethyl, Esprocarb, Cinosulfuron, Thenylchlor, Cumyluron, MK 243, Naproanilide, Anilofos, Benfuresate, Bifenox, CH-900, MCPA, Nitrofen, Oxadiazon, Pendimethalin, Simetryn, Sulcotrione (ICIA0051), Trifluralin, Piperophos, Pyributicarb, Ethoxysulfuron, Bensulfuronmethyl, Pyrazolate, Pyrazoxyfen, Benzofenap, Cyclosulfamuron, Cyhalofop-butyl, NBA-061, Azimsulfuron, Propanil oder Imazosulfuron [Komponente (B)] enthalten.

2. Herbizide Mittel gemäß Anspruch 1, **dadurch gekennzeichnet, daß** das Gewichtsverhältnis der Mischungskomponenten (A) und (B) zwischen 1 : 0,1 und 1 : 100 liegt.

3. Herbizide Mittel gemäß Anspruch 2, **dadurch gekennzeichnet, daß** das Gewichtsverhältnis zwischen 1 : 0,5 und 1 : 50 liegt.

4. Verfahren zur Bekämpfung von Unkräutern, **dadurch gekennzeichnet, daß** man die Unkräuter mit einem Mittel gemäß einem der Ansprüche 1 bis 3 behandelt.

**5.** Verfahren gemäß Anspruch 4, **dadurch gekennzeichnet, daß** die Unkräuter in einer Pflanzenkultur bekämpft werden.

**6.** Verfahren gemäß Anspruch 5, **dadurch gekennzeichnet, daß** die Pflanzenkultur Reis ist.

**7.** Verwendung eines Mittels gemäß einem der Ansprüche 1 bis 3 zur Bekämpfung von Unkräutern.

**8.** Verwendung gemäß Anspruch 7, **dadurch gekennzeichnet, daß** die Unkräuter in einer Pflanzenkultur bekämpft werden.

**9.** Verwendung gemäß Anspruch 8, **dadurch gekennzeichnet, daß** die Pflanzenkultur Reis ist.


**Claims**

**1.** A synergistically active herbicidal composition which comprises, as active components, a mixture of 1-(3-chloro-4,5,6,7-tetrahydropyrazolo-[1,5-a]-pyridin2-yl)-5-(methylpropargylamino)-4-pyrazolylcarbonitrile [Component (A)] and a herbicide selected from the group consisting of bentazone, molinate, daimuron, thiobencarb, butachlor, pretilachlor, dimepiperate, fenoxapropethyl, clomeprop, cinmethylin, bromobutide, quinclorac, mefenacet, pyrazosulfuron-ethyl, esprocarb, cinosulfuron, thenylchlor, cumyluron, MK 243, naproanilide, anilofos, benfuresate, bifenox, CH-900, MCPA, nitrofen, oxadiazon, pendimethalin, simetryn, sulcotrione (ICIA0051), trifluralin, piperophos, pyributicarb, ethoxysulfuron, bensulfuronmethyl, pyrazolate, pyrazoxyfen, benzofenap, cyclosulfamuron, cyhalofop-butyl, NBA-061, azimsulfuron, propanil or imazosulfuron [Component (B)].

**2.** A herbicidal composition as claimed in claim 1 wherein the weight ratio of components (A) and (B) in the mixture is between 1:0.1 and 1:100.

**3.** A herbicidal composition as claimed in claim 2 wherein the weight ratio is between 1:0.5 and 1:50.

**4.** A method of controlling weeds, which comprises treating the weeds with a composition as claimed in any of claims 1 to 3.

**5.** The method as claimed in claim 4 wherein the weeds are controlled in a crop.

**6.** The method as claimed in claim 5, wherein the crop is rice.

**7.** The use of a composition as claimed in any of claims 1 to 3 for controlling weeds.

**8.** The use as claimed in claim 7 wherein the weeds are controlled in a crop.

**9.** The use as claimed in claim 8 wherein the crop is rice.


**Revendications**

**1.** Agents herbicides possédant un effet synérgique **caractérisés en ce qu'**ils contiennent en tant que constituants actifs un mélange de nitrile d'acide 1-(3-chloro-4,5,6,7-tétrahydropyrazolo[1,5-a]pyridin-2-yl)-5-(méthyl-propargylamino)-4-pyrazolylcarboxylique [composant (A)] et d'un herbicide pris dans le groupe comportant bentazone, molinate, daimuron, thiobencarb, butachlor, prétilachlor, dimepipérate, fénoxaprop-éthyl, cloméprop, cinméthylin, bromobutide, quinclorac, mefenacet, pyrazosulfuron-éthyl, esprocarb, cinosulfuron, thénylchlor, cumyluron, MK 243, naproanilide, anilofos, benfuresate, bifénox, CH-900, MCPA, nitrofen, oxadiazon, pendimethalin, simétryn, sulcotrione (ICIA0051), trifluralin, pipérophos, pyributicarb, éthoxysulfuron, bensulfuron méthyl, pyrazolate, pyrazoxyfen, benzofenap, cyclosulfamuron, cyhalofop-butyl, NBA-061, azimsulfuron, propanil ou imazosulfuron [composant (B)].

**2.** Agents herbicides selon la revendication 1, **caractérisés en ce que** le rapport en poids des constituants de mélange (A) et (B) est compris entre 1:0,1 et 1:100.

3. Agents herbicides selon la revendication 1, **caractérisés en ce que** le rapport en poids est compris entre 1:0,5 et 1:50.

4. Procédé pour la lutte contre des mauvaises herbes, **caractérisé en ce qu'**on traite les mauvaises herbes par un agent selon l'une des revendication 1 à 3.

5. Procédé selon la revendication 4, **caractérisé en ce qu'**on lutte contre les mauvaises herbes dans un culture végétale.

6. Procédé selon la revendication 5, **caractérisé en ce que** la culture végétale est le riz.

7. Utilisation d'un agent selon l'une des revendications 1 à 3 pour la lutte contre les mauvaises herbes.

8. Utilisation selon la revendication 7, **caractérisée en ce qu'**on lutte contre les mauvaises herbes dans une culture végétale.

9. Utilisation selon la revendication 8, **caractérisée en ce que** la culture végétale est le riz.